# EUROPEAN PATENT APPLICATION

(11) **EP 4 815 571 A1**
(43) Date of publication of application: **30.09.2026**
(21) Application number: 26166993.1
(22) Date of filing: 24.03.2026
(51) Int. Cl.: H04W 48/16

(54) **COMMUNICATION APPARATUS, CONTROL METHOD THEREOF, PROGRAM, AND STORAGE MEDIUM**

(30) Priority: 25.03.2025 JP 2025050559
(71) Applicant: Canon Kabushiki Kaisha, Tokyo 146-8501 (JP)
(72) Inventor: TSUNEKAWA, Kiyohiro, Ohta-ku, Tokyo, 146-8501 (JP)
(74) Representative: TBK

(57) **Abstract**

A communication apparatus connects to an access point (AP) through wireless communication. The communication apparatus includes a connection means configured to connect to a plurality of APs that operate jointly, through a predetermined communication method; a search means configured to search for an external AP outside the communication apparatus and obtain information pertaining to the external AP discovered by the search; and a display control means configured to, in a case where the external AP discovered by the search means includes a plurality of APs that support the predetermined communication method and the plurality of APs form a group, control information pertaining to the plurality of APs included in the group to be displayed so as to be selectable as a single option when information pertaining to external APs discovered by the search means is displayed.

## Description

### TECHNICAL FIELD

The present disclosure relates to a communication apparatus capable of using wireless communication compliant with IEEE 802.11, a control method thereof, program and a storage medium.

### BACKGROUND

With the increase in the amount of data communicated in recent years, the development of communication technologies such as wireless Local Area Network (LAN) and the like is progressing. The IEEE 802.11 standard series is known as a major wireless LAN communication standard. The IEEE 802.11 standard series includes standards such as IEEE 802.11a/b/g/n/ac/ax/be. Japanese Patent Laid-Open No. 2018-50133 discloses a communication apparatus compliant with IEEE 802.11a/b/g/n/ac/ax. A system for multi-AP communication, in which a plurality of APs operate jointly to transmit data to an STA, is also being considered.

### SUMMARY

Multi-AP communication has room for improvement in terms of favorable communication and usability.

The present disclosure provides a system that improves usability for performing multi-AP communication more suitably.

The present disclosure in its first aspect provides a communication apparatus as specified in claim 1. Optional features are specified in claim 2 to 12.

The present disclosure in its second aspect provides a control method as specified in claim 13.

The present disclosure in its third aspect provides a program as specified in claim 14.

The present disclosure in its fourth aspect provides a storage medium as specified in claim 15.

According to the present disclosure, the usability for performing multi-AP communication more favorably can be improved.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a diagram illustrating the configuration of a wireless communication system.
FIGS. 2A and 2B are diagrams illustrating the configuration of a communication apparatus.
FIGS. 3A to 3D are diagrams illustrating user interface screens.
FIGS. 4A and 4B are diagrams illustrating the configuration of a mobile terminal device.
FIG. 5 is a diagram illustrating the configuration of an access point.
FIG. 6 is a sequence chart illustrating a sequence involved in multi-AP communication performed between an STA and an AP.
FIG. 7 is a flowchart illustrating processing performed by a communication apparatus.
FIG. 8 is a flowchart illustrating processing performed by a communication apparatus.
FIG. 9 is a flowchart illustrating processing performed by a communication apparatus.
FIG. 10 is a diagram illustrating the configuration of a wireless communication system.
FIG. 11A is a diagram illustrating an example of AP wireless network settings.
FIG. 11B is a diagram illustrating an example of some information pertaining to an AP.
FIG. 11C is a diagram illustrating an example of a detected AP list.
FIG. 12 is a diagram illustrating the configuration of an AP list for display.
FIG. 13 is a diagram illustrating the configuration of an AP list for display.
FIG. 14 is a diagram illustrating the configuration of an AP list for display.
FIG. 15 is a diagram illustrating the configuration of an AP list for display.
FIG. 16 is a flowchart illustrating processing performed by a communication apparatus.
FIG. 17 is a flowchart illustrating processing performed by a communication apparatus.
FIGS. 18A to 18H are diagrams illustrating examples of displays on a console unit.
FIG. 19 is a flowchart illustrating processing performed by a communication apparatus.
FIGS. 20A to 20C are diagrams illustrating examples of displays on a console unit.
FIG. 21 is a flowchart illustrating processing performed by a communication apparatus.
FIGS. 22A to 22D are diagrams illustrating sorting that is based on radio wave strengths of APs.
FIGS. 23A and 23B are diagrams illustrating examples of displays on a console unit.
FIGS. 24A to 24E are diagrams illustrating examples of displays in an operation unit of a mobile terminal device.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### System Configuration

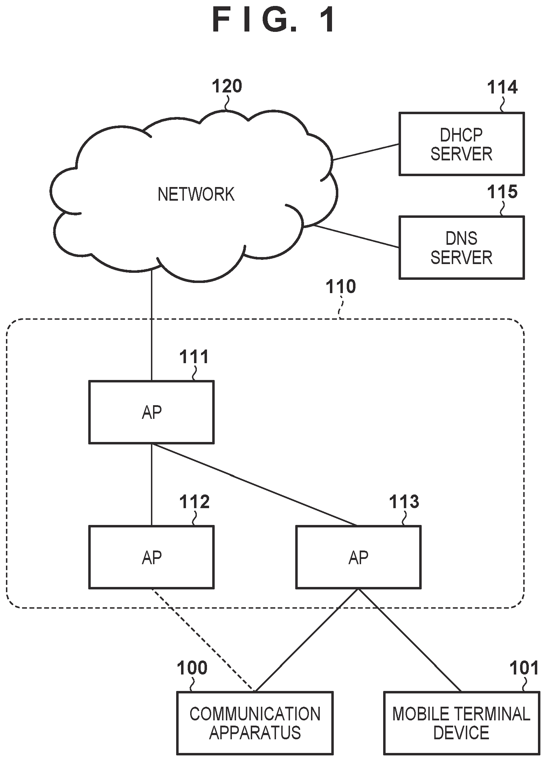

FIG. 1 illustrates an example of the configuration of a system according to the present embodiment. In one example, this system is a wireless communication system in which a plurality of communication apparatuses can communicate with each other wirelessly. The system illustrated in FIG. 1 includes an MFP 100 serving as a communication apparatus, a mobile terminal device 101, a multi-AP group 110 including a plurality of access points (APs), a DHCP server 114, a DNS server 115, and a network 120. Although the multi-AP group 110 will be described as including an AP 111, an AP 112, and an AP 113, the multi-AP group 110 may include more APs than these.

The mobile terminal device 101 is a device having a wireless communication function that uses wireless LAN or the like. "Wireless LAN" may be called "WLAN" hereinafter. The mobile terminal device 101 may be a personal information terminal such as a Personal Digital Assistant (PDA), a mobile telephone terminal (a smartphone), a tablet terminal, a digital camera, a personal computer, or the like.

The MFP 100 is a printing device having a printing function, and may further have a reading function (a scanner), a fax function, a telephone function, and the like. The MFP 100 according to the present embodiment also has a communication function that enables wireless communication with the mobile terminal device 101. Although the present embodiment describes a case where the MFP 100 is used as an example, the configuration is not limited thereto. For example, a scanner device, a projector, a mobile terminal, a smartphone, a laptop PC, a tablet terminal, a PDA, a digital camera, a music playback device, a television, a smart speaker, or the like, which has a communication function, may be used instead of the MFP 100. Note that "MFP" is an acronym for "Multi-Function Peripheral".

The AP 111 is provided separate from (outside) the mobile terminal device 101 and the MFP 100, and functions as a WLAN base station device. A communication apparatus having a WLAN communication function can communicate in WLAN infrastructure mode via the AP 111. Infrastructure mode may also be called "wireless infrastructure mode". The AP 111 communicates wirelessly with a communication apparatus that has been permitted (authenticated) to a connection to the AP 111 itself, and relays wireless communication between that communication apparatus and other communication apparatuses. The AP 111 can, for example, be connected to a wired communication network, and can relay communication between a communication apparatus connected to that wired communication network and another communication apparatus wirelessly connected to the AP 111.

The AP 112 and the AP 113 have the same hardware configurations as the AP 111. The AP 111, the AP 112, and the AP 113 are APs that support multi-AP communication (described later), and that form a group (the multi-AP group 110) and operate jointly.

The DHCP server 114 connects to the MFP 100 via the AP 111 and the network 120, and provides services to the MFP 100 by responding to requests from the MFP 100. Although FIG. 1 illustrates a configuration in which the DHCP server 114 is connected as a device separate from the AP 111, the AP 112, and the AP 113, the configuration may be such that the AP 111, the AP 112, and the AP 113 have DHCP server functionality.

The DNS server 115 is connected to the MFP 100, the mobile terminal device 101, and the like via the AP 111 and the network 120, and provides services for name resolution by responding to requests from the MFP 100, the mobile terminal device 101, and the like. Here, the network 120 may be the Internet, or may be a private network in a business, a mobile phone network, or the like.

### External Configuration of MFP

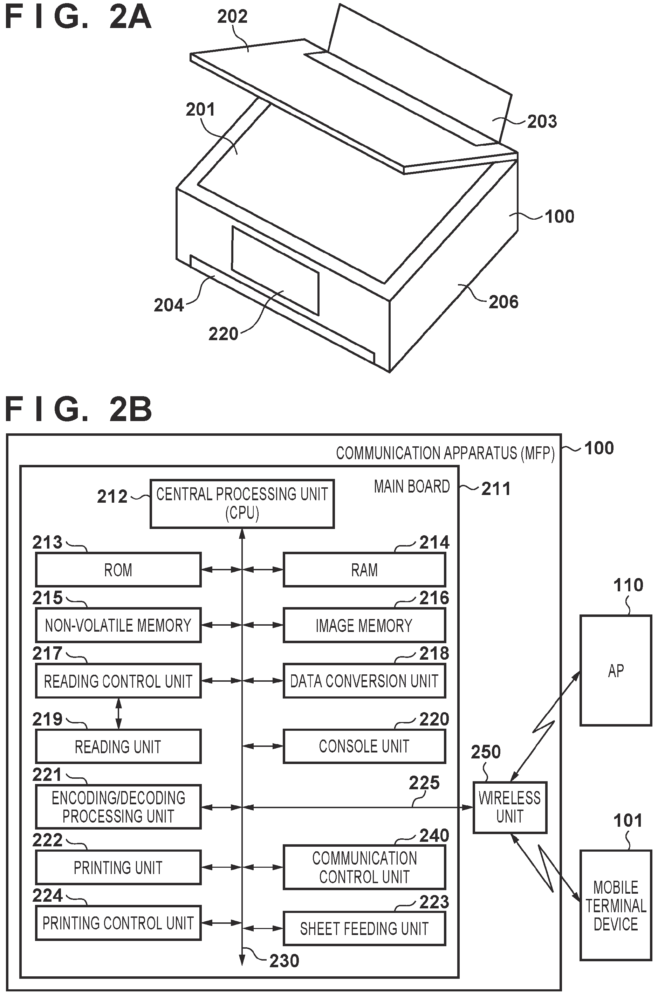

FIG. 2A illustrates an example of the external configuration of the MFP 100. The MFP 100 includes a document platform 201, a document cover 202, a printing paper insertion port 203, a printing paper discharge port 204, and a console unit 220, for example. The document platform 201 is a platform for placing a document to be read. The document cover 202 is a cover for securing a document placed on the document platform 201, and for ensuring that light from a light source that illuminates the document does not escape to the exterior when the document is being read (scanned). The printing paper insertion port 203 is an insertion port in which various sizes of sheets can be set. The printing paper discharge port 204 is a discharge port for discharging a sheet which has been printed onto. Paper set in the printing paper insertion port 203 is conveyed one sheet at a time to a printing unit, where the sheet is printed onto and then discharged from the printing paper discharge port 204. The console unit 220 is configured including a touchscreen, and is configured such that a user can launch various functions as an MFP, make various settings, and the like. The console unit 220 may also be configured including physical operation keys such as text input keys, a cursor key, an OK key, a cancel key, and the like, as well as LEDs, an LCD, and the like.

The MFP 100 has a WLAN wireless communication function and therefore is configured also including a wireless communication antenna 206 for that wireless communication, although the antenna 206 is not necessarily visible from the exterior. Like the mobile terminal device 101, the MFP 100 can communicate wirelessly over a WLAN.

### MFP Configuration

FIG. 2B illustrates an example of the configuration of the MFP 100. The MFP 100 is configured including a main board 211 that performs main control of the device itself, and a wireless unit 250, which is a single communication module that performs WLAN communication using at least one antenna. The MFP 100 may also be configured including a wired LAN unit for wired LAN communication, for example.

The main board 211 is configured including, for example, a CPU 212 (a central processing unit), a ROM 213, a RAM 214, a non-volatile memory 215, an image memory 216, a reading control unit 217, a data conversion unit 218, a reading unit 219, and an encoding/decoding processing unit 221. The main board 211 also includes, for example, a printing unit 222, a sheet feeding unit 223, a printing control unit 224, and the console unit 220. The function units in the main board 211 are connected to each other by a system bus 230 managed by the CPU 212. Additionally, the main board 211 and the wireless unit 250 are connected, for example, by a dedicated bus 225.

The CPU 212 is a system control unit including at least one processor, and controls the MFP 100 as a whole. The processing by the MFP 100 described below is implemented by the CPU 212 executing programs stored in the ROM 213, for example. Note that dedicated hardware for each process may be provided. The ROM 213 is a non-volatile memory that stores control programs executed by the CPU 212, embedded OS programs, and the like. In the present embodiment, the CPU 212 performs software control such as scheduling, task switching, and the like by loading each control program stored in the ROM 213 into the RAM 214 and executing the program under the management of an embedded OS, which is also stored in the ROM 213.

The RAM 214 is a volatile memory constituted by an SRAM or the like. The RAM 214 stores data such as program control variables, data such as setting values registered by the user and management data of the MFP 100, and the like. In addition, the RAM 214 can be used as various types of working buffers. The non-volatile memory 215 is constituted by a memory such as a flash memory, for example, and continues to store data even when the MFP 100 is turned off. The image memory 216 is constituted by a memory such as a DRAM. The image memory 216 stores image data received through the wireless unit 250, image data processed by the encoding/decoding processing unit 221, and the like. Note that the memory configuration of the MFP 100 is not limited to the configuration described above. The data conversion unit 218 analyzes data in various formats, converts image data into print data, and the like.

The reading control unit 217 controls the reading unit 219 (e.g., a contact-type image sensor (CIS)) to optically read (scan) a document placed on the document platform 201. The reading control unit 217 converts an image obtained by optically reading the document into electrical image data (an image signal) and outputs the image data. At this time, the reading control unit 217 may perform various types of image processing, such as binarization, half-tone processing, and the like before outputting the image data.

The console unit 220 includes a touchscreen that displays images that are based on display control by the CPU 212, and generates signals in response to accepting user operations made through the touchscreen, physical operation keys, and the like.

The encoding/decoding processing unit 221 performs encoding processing, decoding processing, scaling processing, and the like on image data handled by the MFP 100 (JPEG, PNG, and the like).

The sheet feeding unit 223 holds sheets for printing. The sheet feeding unit 223 can supply sheets set therein under the control of the printing control unit 224. The sheet feeding unit 223 may include a plurality of sheet feeding units to hold a plurality of types of sheets in a single apparatus, and from which sheet feeding unit sheets are fed can be controlled under the control of the printing control unit 224.

The printing control unit 224 applies various types of image processing, such as smoothing processing, print darkness correction processing, color correction, and the like, to the image data to be printed, and outputs the processed image data to the printing unit 222. The printing unit 222 is configured to be capable of executing inkjet printing processing, for example, so that ink supplied from an ink tank is ejected from a print head and an image is recorded on a recording medium such as paper. Note that the printing unit 222 may be configured to be capable of executing other types of printing processing, such as electrophotographic printing. The printing control unit 224 can also periodically read out information on the printing unit 222 and update status information and the like stored in the RAM 214, including the amount of ink remaining in the ink tank, the state of the print head, and the like.

The wireless unit 250 is a unit capable of providing a WLAN communication function, and is capable of providing functions similar to those of a wireless unit 401 of the mobile terminal device 101, for example. In other words, according to the WLAN standard, the wireless unit 250 converts data into packets and transmits the packets to other devices, and also restores packets from other external devices into the original data thereof and outputs the data to the CPU 212.

The wireless unit 250 is capable of communicating as a station ("STA", hereinafter) or an access point (AP) compliant with the IEEE 802.11 standard series. Specifically, communication compliant with the IEEE 802.11a/b/g/n/ac/ax/be/bn standards can be performed. The wireless unit 250 includes at least one processor and at least one memory in which programs are stored.

A communication control unit 240 is a unit that controls the communication functions of the MFP 100, and controls the wireless unit 250. The processing by the communication control unit 240 is realized by the CPU 212 executing a control program stored in the ROM 213. The communication control unit 240 and the wireless unit 250 are connected to each other by the system bus 230 and the dedicated bus 225, for example.

### MFP Console Unit

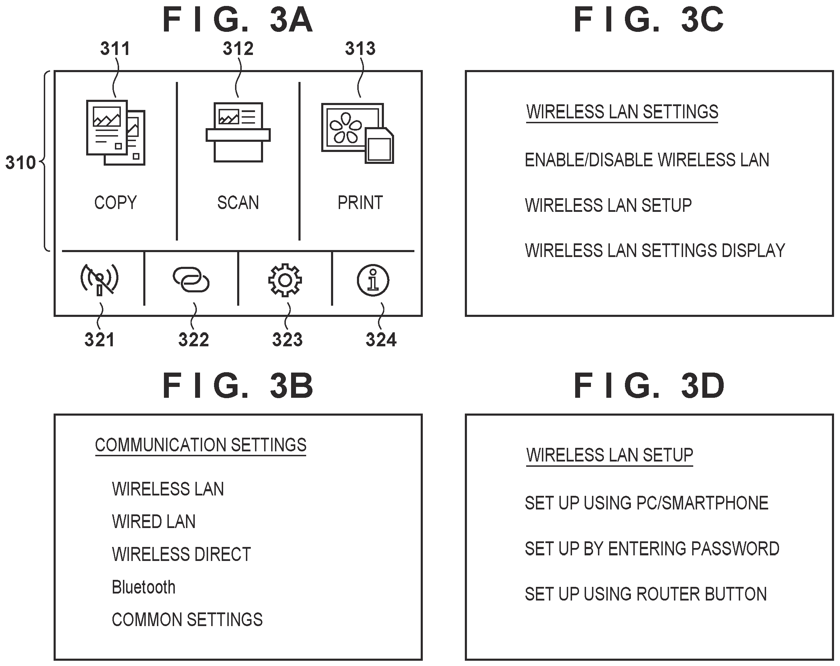

FIGS. 3A to 3D schematically illustrate examples of screens displayed in a display (a touchscreen) included in the console unit 220 of the MFP 100.

FIG. 3A illustrates an example of a home screen displayed when the MFP 100 is turned on and operations such as printing, scanning, or the like are not underway (an "idle state" or a "standby state"). A region 310 at the top of the home screen is a basic menu region, where menu items selected when instructing copying or scanning are displayed. In FIG. 3A, icons 311 to 313 corresponding to copying, scanning, and printing are listed as menu items (display items) in the basic menu in the region 310. When each menu item in the basic menu is selected, a corresponding detailed menu is displayed, and the MFP 100 can be caused to execute operations/functions (copying, scanning, or the like) corresponding to the selected menu item. A menu item different from the icons 311 to 313 can be displayed in the region 310 through an operation for displaying another page in the basic menu (an operation for sliding to the left or right in the region 310 or the like). For example, an icon corresponding to the cloud can be displayed. "Cloud" is a menu item related to a cloud function that uses Internet communication.

A network display region 321 is a region that displays an icon indicating the state of the network. In the example illustrated, an icon indicating that both wireless infrastructure and wireless direct are disabled is displayed in the network display region 321. Additionally, a communication settings menu can be displayed by touching the network display region 321.

An icon 322 is an operation icon that accepts an instruction to perform setup using a PC or a smartphone. When the icon 322 is touched, the same operations are performed as when "Set Up Using PC/Smartphone" is selected in FIG. 3D (described later).

An icon 323 is an operation icon selected when changing the settings of the MFP 100 or performing maintenance.

FIG. 3B is an example of the display of a menu screen for the communication settings displayed when the network display region 321 is touched in the home screen illustrated in FIG. 3A. "Wireless LAN", "Wired LAN", "Wireless Direct", "Bluetooth", and "Common Settings" are displayed as menu items (options) in the communication settings menu screen. "Wireless LAN", "Wired LAN", and "Wireless Direct" are menu items for LAN settings, and settings such as wired connection settings, settings for enabling and disabling wireless infrastructure mode, settings for enabling and disabling a P2P mode such as WFD and software AP mode, and the like can be set using these items.

FIG. 3C is an example of the display of a menu screen for the wireless LAN settings, displayed when the "Wireless LAN" item has been selected in the screen illustrated in FIG. 3B. "Enable/Disable Wireless LAN", "Wireless LAN Setup", and "Wireless LAN Settings Display" are displayed as menu items (options) in the wireless LAN settings menu screen. The settings for enabling/disabling wireless infrastructure mode can be switched by selecting the "Enable/Disable Wireless LAN" item. When the "Wireless LAN Setup" item is selected, the wireless LAN setup menu in FIG. 3D is displayed. When "Display Wireless LAN Settings" is selected, a details screen displaying details such as the current wireless LAN settings and communication status (the wireless LAN settings display screen) is displayed.

FIG. 3D is an example of the display of a menu screen for wireless LAN setup, displayed when the "Wireless LAN Setup" item has been selected in the screen illustrated in FIG. 3C. "Set Up Using PC/Smartphone", "Set Up by Entering Password", and "Set Up Using Router Button" are displayed as menu items (options) in the wireless LAN setup menu screen. Wireless LAN setup such as setup using network setup mode (described later), setup by entering a password, setup using a pushbutton method, or the like can be performed using these items.

### External Configuration of Mobile Terminal Device

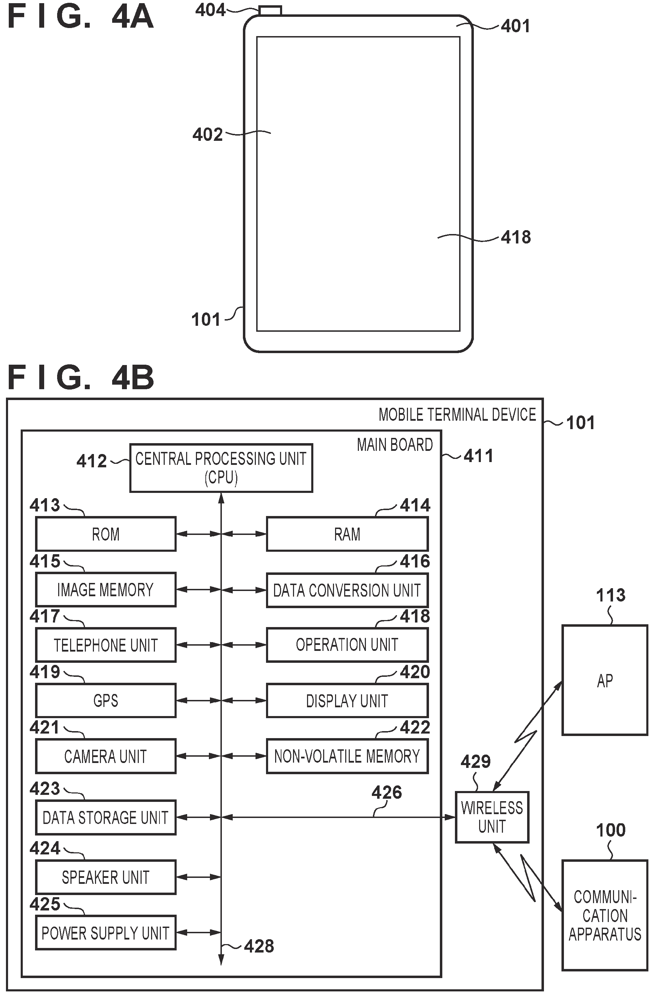

FIG. 4A is a diagram illustrating an example of the external configuration of the mobile terminal device 101. The present embodiment will describe a case where the mobile terminal device 101 is a typical smartphone, for example. Note that the mobile terminal device 101 is configured including a display unit 420, an operation unit 418, and a power key 404, for example. The display unit 420 is a display having an organic electroluminescence (EL)-based display mechanism or a Liquid Crystal Display (LCD)-based display mechanism, for example. Note that the display unit 420 may display information using a Light Emitting Diode (LED) or the like, for example. The mobile terminal device 101 may also have a function for outputting information by audio in addition to or instead of the display unit 420. The operation unit 418 is configured including physical keys such as keys, buttons, and the like, a touch panel, and the like for detecting user operations. Note that in this example, the information display in the display unit 420 and the acceptance of user operations by the operation unit 418 are performed using a common touchscreen, and thus the display unit 420 and the operation unit 418 are implemented as a single device. In this case, for example, button icons or a software keyboard are displayed using a display function of the display unit 420, and the user touching those locations is detected using an operation reception function of the operation unit 418. Note that the display unit 420 and the operation unit 418 may be separate, and the hardware for display and the hardware for accepting operations may be provided individually. The power key 404 is a physical key for accepting user operations for turning the mobile terminal device 101 on or off.

The mobile terminal device 101 includes the wireless unit 401, which provides WLAN communication functionality, but is not necessarily visible from the exterior. The wireless unit 401 is configured to be capable of data (packet) communication in a WLAN system compliant with the IEEE 802.11 standard series (IEEE 802.11a/b/g/n/ac/ax/be/bn), for example. However, the configuration is not limited thereto, and the wireless unit 401 may be capable of communication in a WLAN system compliant with another standard. This example assumes that the wireless unit 401 is capable of communicating in both the 2.4 GHz and 5 GHz frequency bands. However, the wireless unit 401 is not limited thereto, and may be capable of communicating in one or more frequency bands including the 2.4 GHz band, the 5 GHz band, and the 6 GHz band. The wireless unit 401 is also assumed to be capable of performing communication based on WFD, communication using software AP mode, communication using wireless infrastructure mode, and the like. Operations performed in these modes will be described later.

### Configuration of Mobile Terminal Device

FIG. 4B illustrates an example of the configuration of the mobile terminal device 101. The mobile terminal device 101 includes a main board 411 that performs main control of the device itself, and a wireless unit 429 that performs WLAN communication, for example. The main board 411 includes, for example, a CPU 412, a ROM 413, a RAM 414, an image memory 415, a data conversion unit 416, a telephone unit 417, a GPS 419, a camera unit 421, a non-volatile memory 422, a data storage unit 423, a speaker unit 424, and a power supply unit425. Here, CPU is an acronym of "Central Processing Unit", ROM is an acronym of "Read Only Memory", RAM is an acronym of "Random Access Memory", and GPS is an acronym of "Global Positioning System". The mobile terminal device 101 also includes the display unit 420 and the operation unit 418. The function units in the main board 411 are connected to each other by a system bus 428 managed by the CPU 412. Additionally, the main board 411 and the wireless unit 429 (the wireless unit 401 mentioned earlier) are connected, for example, by a dedicated bus 426.

The CPU 412 is a system control unit including at least one processor, and controls the mobile terminal device 101 as a whole. The processing by the mobile terminal device 101 described below is implemented by the CPU 412 executing programs stored in the ROM 413, for example. Note that dedicated hardware for each process may be provided. The ROM 413 stores control programs executed by the CPU 412, embedded operating system (OS) programs, and the like. In the present embodiment, the CPU 412 performs software control such as scheduling, task switching, and the like by executing each control program stored in the ROM 413 under the management of an embedded OS, which is also stored in the ROM 413.

The RAM 414 is constituted by a Static RAM (SRAM) or the like. The RAM 414 stores data such as program control variables, data such as setting values registered by the user and management data of the mobile terminal device 101, and the like. In addition, the RAM 414 can be used as various types of working buffers. The image memory 415 is constituted by a memory such as a Dynamic RAM (DRAM) or the like. The image memory 415 temporarily stores image data received through the wireless unit 429, image data read out from the data storage unit 423, and the like for processing by the CPU 412. The non-volatile memory 422 is constituted by a memory such as a flash memory, for example, and continues to store data even when the mobile terminal device 101 is turned off. Note that the memory configuration of the mobile terminal device 101 is not limited to the configuration described above. For example, the image memory 415 and the RAM 414 may be implemented by the same memory, data may be backed up using the data storage unit 423, or the like. Additionally, although the present embodiment describes a DRAM as an example of the image memory 415, another storage medium such as a hard disk, a non-volatile memory, or the like may be used instead.

The data conversion unit 416 analyzes data in various formats, performs data conversion such as color conversion and image conversion, and the like. The telephone unit 417 controls a telephone line, and implements telephone communication by processing audio data input and output through the speaker unit 424. The GPS 419 receives radio waves transmitted from a satellite and obtains location information such as the current latitude, longitude, and the like of the mobile terminal device 101.

The camera unit 421 has a function for electronically recording and encoding an image input through a lens. The image data captured by the camera unit 421 is stored in the data storage unit 423. The speaker unit 424 performs control for implementing a function for inputting or outputting audio for the telephone function, other functions such as alarm notifications, and the like. The power supply unit 425 is a portable battery, for example, and controls the supply of power to the interior of the device. Power states include, for example, a "battery depleted state" in which there is no power remaining in the battery, a "power off state" in which the power key 404 has not been pressed, an "operating state" in which the device is running normally, and a "power-saving state" in which the device is operating but is in a power saving state.

The display unit 420 enables various types of input operations to be made, displays the operating state and status of the MFP 100, and the like under the control of the CPU 412. In response to user operations being accepted, the operation unit 418 performs control such as generating electrical signals corresponding to those operations and outputting the electrical signals to the CPU 412.

The mobile terminal device 101 performs wireless communication using the wireless unit 429, and performs data communication with other devices such as the MFP 100. The wireless unit 429 converts data into packets and transmits the packets to other devices. The wireless unit 429 also restores packets from other external devices into the original data and outputs the data to the CPU 412. The wireless unit 429 is a unit for implementing communication compliant with each WLAN standard. The wireless unit 429 can operate in at least two communication modes simultaneously, including wireless infrastructure mode and P2P (WLAN) mode. Note that the frequency bands used in these communication modes can be limited by the functions and performance of the hardware.

### Configuration of Access Point

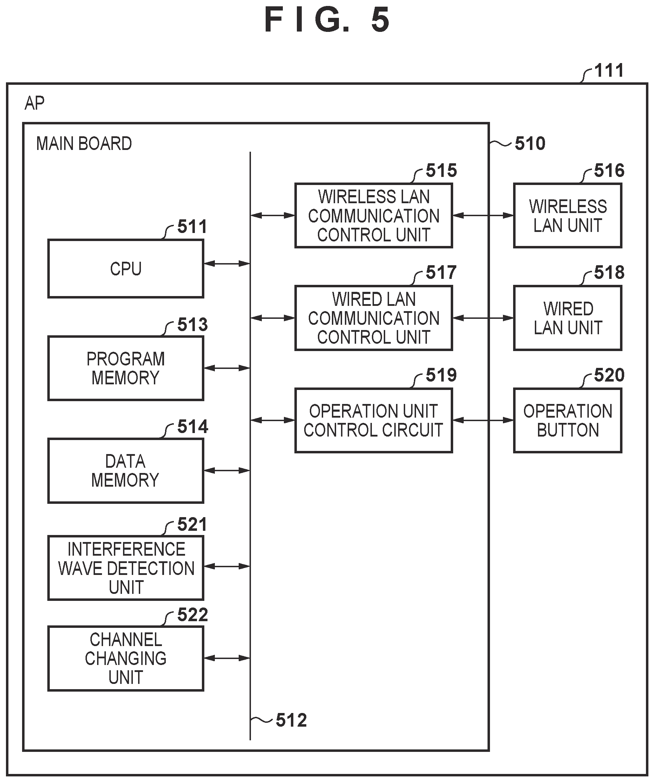

FIG. 5 is a block diagram illustrating the configuration of the AP 111 having a wireless LAN access point function. The AP 111 is configured to include a main board 510, which controls the AP 111, a wireless LAN unit 516, a wired LAN unit 518, and an operation button 520.

A microprocessor-type CPU 511 disposed on the main board 510 operates in accordance with a control program stored in a ROM-type program memory 513 and data in a RAM-type data memory 514, which are connected to the CPU 511 by an internal bus 512. The CPU 511 communicates with other communication terminal devices over a wireless LAN by controlling the wireless LAN unit 516 through a wireless LAN communication control unit 515. Specifically, the wireless LAN unit 516 is configured to be capable of data (packet) communication in a WLAN system compliant with the IEEE 802.11 standard series (IEEE 802.11a/b/g/n/ac/ax/be/bn), for example, as wireless LAN communication. The wireless LAN unit 516 is also capable of communicating as an AP that supports multi-AP communication (described later). However, the configuration is not limited thereto, and the wireless LAN unit 516 may be capable of communication in a WLAN system compliant with another standard. This example assumes that the wireless LAN unit 516 is capable of communicating in the 2.4 GHz, 5 GHz, and 6 GHz frequency bands. However, the wireless LAN unit 516 is not limited thereto, and may be capable of communicating in one or more frequency bands including the 2.4 GHz band, the 5 GHz band, and the 6 GHz band.

The CPU 511 also communicates with other communication apparatuses over a wired LAN by controlling the wired LAN unit 518 through a wired LAN communication control unit 517. The CPU 511 is capable of accepting operations made by a user manipulating the operation button 520, by controlling an operation unit control circuit 519. The CPU 511 includes at least one processor.

The AP 111 also includes an interference wave detection unit 521 and a channel changing unit 522. The interference wave detection unit 521 performs interference wave detection processing when communicating wirelessly in a band in which Dynamic Frequency Selection (DFS) is implemented. When communicating wirelessly in a band in which DFS is implemented, the channel changing unit 522 performs processing for changing the channel used when interference waves are detected, when it is necessary to immediately change to a free channel, and the like.

Note that the APs 112 and 113 have the same configurations as the AP 111.

### P2P Mode (Direct Mode)

An overview of a P2P (WLAN) communication method for devices to wirelessly communicate directly with each other without traversing an external access point in WLAN communication will be given next. P2P (WLAN) communication can be implemented through a plurality of methods, e.g., the communication apparatus can support a plurality of modes for P2P (WLAN) communication and selectively execute P2P communication (WLAN) using one of the plurality of modes.

The following two modes are assumed as P2P modes.
- Software AP Mode
- Wi-Fi Direct (WFD) Mode

A communication apparatus capable of P2P communication can be configured to support at least one of these modes. However, even a communication apparatus capable of P2P communication does not have to support all of these modes, and may be configured to support only some.

In a communication apparatus having a WFD communication function (e.g., the mobile terminal device 101), an application for implementing the communication function (in some cases, a dedicated application) is called in response to a user operation being accepted through the operation unit of the device. The communication apparatus can then display a screen of a user interface (UI) provided by the application to prompt the user to perform an operation, and then perform WFD communication based on the user operation accepted in response thereto.

### • Software AP Mode

In software AP mode, the communication apparatus (e.g., the mobile terminal device 101) operates in the role of a client requesting various types of services. The other communication apparatus (e.g., the MFP 100) operates as a software AP capable of performing WLAN AP functions through software settings. Note that commands, parameters, and the like sent and received when establishing a wireless connection between the client and the software AP may be any specified by the Wi-Fi (registered trademark) standard, and will therefore not be described. The MFP 100 operating in software AP mode also determines a frequency band and a frequency channel as a parent station. Accordingly, the MFP 100 can select which frequency band to use from 5 GHz and 2.4 GHz, as well as which frequency channel to use in that frequency band.

### • WFD Mode

The MFP 100 may be started so as to be fixed as the parent station for WFD mode (Autonomous Group Owner). In this case, GO Negotiation processing for determining the role is unnecessary. Furthermore, in this case, the MFP 100 also determines the frequency band and the frequency channel to be used as the parent station. Accordingly, the MFP 100 can select which frequency band to use from 5 GHz and 2.4 GHz, as well as which frequency channel to use in that frequency band.

### Wireless Infrastructure Mode

In wireless infrastructure mode, communication apparatuses that communicate with each other (e.g., the mobile terminal device 101 and the MFP 100) are connected to an external AP that manages the network (e.g., the AP 111), and the communication apparatuses communicate with each other through the AP. In other words, communication between the communication apparatuses is executed over a network constructed by an external AP. The mobile terminal device 101 and the MFP 100 both discover the AP 111, and by transmitting a connection request and connecting to the AP 111, those communication apparatuses can communicate in wireless infrastructure mode via the AP 111. Note that a plurality of communication apparatuses may be connected to individual separate APs. In this case, the communication apparatuses can communicate by data being transferred among the APs. The commands, parameters, and the like sent and received during communication between the communication apparatuses via the access points may be any specified by the Wi-Fi standard, and will therefore not be described. In this case, the AP 111 also determines the frequency band and the frequency channel. Accordingly, the AP 111 can select which frequency band to use, from 5 GHz or 2.4 GHz and 6 GHz, as well as which frequency channel to use in that frequency band.

### Multi-AP Communication

In the IEEE 802.11be standard in which is standardized multi-link communication, in which, for example, a single access point (AP) establishes a plurality of links with a single station (STA) over a plurality of frequency channels, and communication is performed over those channels in parallel.

In addition, with the IEEE 802.11bn standard, which is the successor to the IEEE 802.11be standard, methods for improving usability using multi-AP communication are being considered.

A distributed multiple-input and multiple-output (MIMO) technique that is based on MIMO technology, in which a plurality of transmitting and receiving antennas are used in the same channel at the same time, can be given as an example. In distributed MIMO, in an environment where a plurality of APs and a plurality of STAs are present, groups are formed among the APs to share information about the communication state, the state of each AP, and the like, and data is sent from the plurality of APs to the STAs in parallel at the same timing. Joint transmission by the plurality of APs makes it possible to increase the number of spatial streams compared to when using a single AP, which is expected to improve throughput.

A technique in which a plurality of APs transmit data to an STA at different timings through time division, which improves the reception quality at the STA through the effects of time diversity and spatial diversity, can be given as another example.

A communication technique in which such a plurality of APs form a group and operate jointly is called "multi-AP communication", and the APs are classified into a single "Coordinator AP", which manages all the APs, and "Coordinated APs", which operate under the management of the Coordinator AP.

Hereinafter, in multi-AP communication, an AP that manages the other APs will be called a "Coordinator AP" or a "Sharing AP". An AP that operates under the management of the Coordinator AP will be called a "Coordinated AP" or a "Shared AP". The Coordinator AP and the Coordinated AP can exchange signals with each other. Each of the plurality of APs, including the APs 111 to 113, may be connected wirelessly to perform wireless LAN communication, or may be connected by wires to perform wired LAN communication. It is assumed that the APs 111 to 113 are capable of multi-AP communication in accordance with the IEEE 802.11 series standard, and support a configuration in which the plurality of APs operate jointly to communicate with a single common STA.

Multi-AP communication methods include Co-OFDMA and Joint-TX. Co-OFDMA, or Coordinated-Orthogonal Frequency Division Multiple Access, separates usable frequency resources among a plurality of Basic Service Sets (BSSs). For example, the frequency resources used by the AP 112 and the MFP 100 (STA) and the frequency resources used by the AP 113 and the MFP 100 (STA) do not overlap with each other. This makes it possible to prevent the communication from interfering among the BSSs. When an STA is capable of transmitting and receiving data simultaneously in a plurality of frequency bands (a plurality of resource units within the same channel or spanning different channels, a plurality of channels, a plurality of bands among the 2.4 GHz, 5 GHz, and 6 GHz bands), a plurality of APs can operate jointly to transmit and receive data to and from the same STA. The "data" is image data, audio data, document data, print data, or the like, which are content data. In this case, for example, transmitting a packet 1 of content A from the AP 112 to the MFP 100 (STA) and transmitting a packet 2 of the content A from the AP 113 to the MFP 100 (STA) can be performed in parallel.

In Joint-TX, or Joint-Transmission, the same signal is transmitted and received between a plurality of APs and a single STA. In this case, the control is performed such that a multiplexed wave (a superimposed wave; a composite wave), which is composited such that radio waves output from the plurality of APs are amplified through wave interference, is received by the STA. As a result, control is performed such that the STA receives a signal that is stronger than the signal from a single AP alone (an amplified signal). For example, the signals between the AP 112 and the MFP 100 (the STA) and between the AP 113 and the MFP 100 (the STA) are multiplexed such that the same signal is amplified at the position of the MFP 100 (the STA). For example, at the same timing, the packet 1 of the content A is transmitted from the AP 112 to the MFP 100 (STA), and the packet 1 of the content A is transmitted from the AP 113 to the MFP 100 (STA). At that time, the radio waves of the content A are transmitted such that the radio waves of the content A are multiplexed at the position of the MFP 100 (STA). This makes it possible to improve the reliability (connectivity) of communication between the STA and the AP, as well as the speed at which data is transmitted and received.

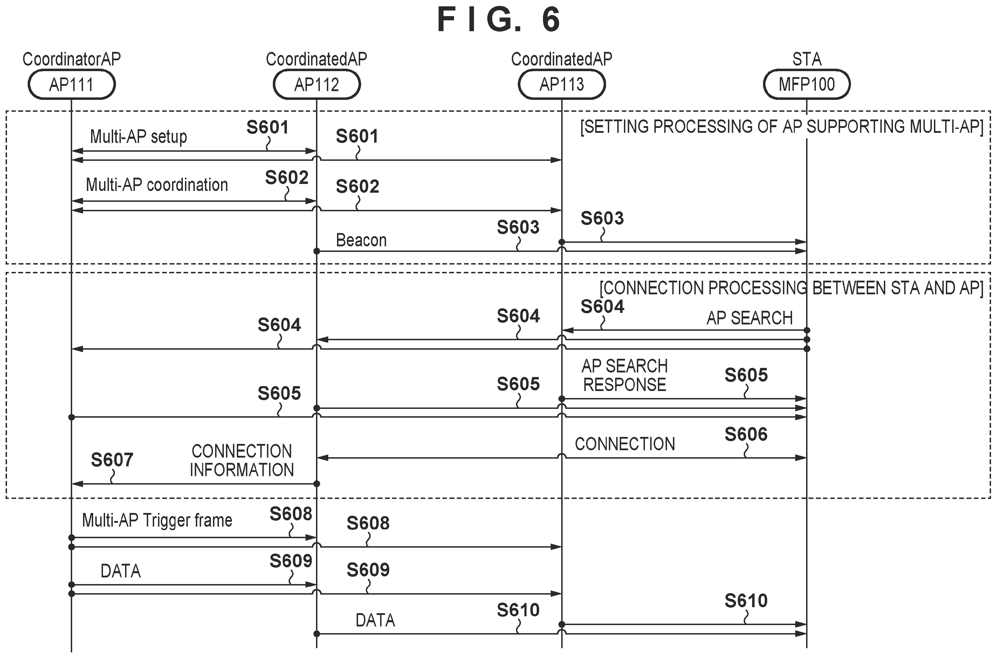

FIG. 6 is a sequence chart illustrating an example of processing in which the AP 111 operates as the Coordinator AP, and the AP 112 and the AP 113, which are Coordinated APs, operate jointly to transmit and receive data to and from the MFP 100 (the STA). Processing executed by each device in this sequence is implemented by the CPU of each device reading out various programs stored in a memory provided in that device, such as a ROM or the like, into a RAM and executing those programs.

In step S601, the APs 111 to 113 perform multi-AP setup processing. In the multi-AP setup processing, capability information and parameters are exchanged among the APs, and a group for performing the multi-AP communication is formed.

In step S602, multi-AP coordination processing is performed among the APs 111 to 113. For example, the multi-AP communication method is determined, the roles of the APs (Coordinator AP or Coordinated AP) are determined, parameters and network information are exchanged among the APs, and the like. The multi-AP communication method and the roles of the APs are determined by exchanging and comparing parameters among the APs 111 to 113. At this time, the Coordinator AP (the AP 111) notifies the Coordinated APs (the AP 112 and the AP 113) of the network information to be used in common (a Service Set Identifier (SSID) to be used in common, a Basic Service Set Identifier (BSSID) to be used in common, and the like). Note that the BSSID to be used in common is communicated when using Joint-TX.

In step S603, the AP 112 and the AP 113 transmit a Beacon frame (information that the AP voluntarily transmits at regular intervals) in accordance with the network information communicated in step S602. The Beacon frame includes information indicating that multi-AP communication can be performed with respect to the connected STA, information indicating the multi-AP communication method, and the like. A multi-AP Information Element (IE) may be added and transmitted within the Beacon frame transmitted by the APs supporting multi-AP communication. The multi-AP IE includes at least one of the following items of information (one or more of the following items of information):
· SSIDs used by a plurality of Coordinated APs belonging to the same multi-AP group (ESSIDs to be used in common, as communicated in step S602)
· a BSSID (the BSSID to be used in common for APs belonging to the multi-AP group 110, communicated in step S602 when using Joint-TX)
· a BSS color value (identifier) for multi-AP communication
· an operational wireless channel (a communication channel to be used in common when using Joint-TX. A communication channel and/or resource unit used by the source AP, when using Co-OFDMA. A communication channel and/or resource unit used by other APs in the multi-AP group 110 may be included when using Co-OFDMA.)
· the multi-AP communication method (information that specifies whether the method is Co-OFDMA or Joint-TX)

Note that the storage method and the configuration of these items of information are not limited thereto, and similar information may be stored and transmitted in a similar format. Note that the multi-AP IE may have another name, such as "multi-AP element". Additionally, the multi-AP IE may be included in a wireless frame such as the device search response (Probe Response) frame used in step S605, other Action frames, or the like.

In step S604, the MFP 100 (the STA) starts establishing a connection with an AP using wireless infrastructure mode. The MFP 100 (the STA) starts searching for the AP by transmitting a device search request (Probe Request) frame to determine whether the AP supports multi-AP communication.

In step S605, the MFP 100 (the STA) searches out and discovers the AP by receiving a device search response (Probe Response) frame, which is a response to the AP search, a Beacon frame, or the like transmitted from the AP.

In step S606, the MFP 100 (the STA) performs connection processing with at least one Coordinated AP based on information included in the frame received in step S605. Here, it is assumed that the MFP 100 (the STA) transmits a connection request to the AP 112 and executes a connection attempt (the connection processing). The connection processing here includes processing such as Authentication and Association specified in IEEE 802.11. The MFP 100 (the STA) may add a multi-AP IE to a transmitted Association Request frame to indicate that it requests multi-AP communication. Having received the Association Request frame, the AP 112 transmits an Association Response frame as a response thereto. As a result, a wireless LAN connection is established between the MFP 100 (STA) and the AP 112.

In step S607, when a connection has been established with the MFP 100 (the STA), the AP 112 notifies the Coordinator AP (the AP 111) of information indicating that a connected state has been established with the MFP 100 (the STA), as well as the connection parameters pertaining to the connected MFP 100 (the STA). The connection parameters pertaining to the connected MFP 100 (the STA) include information used in the connection processing between the AP 112 and the MFP 100 or generated during the connection processing (a PMK cache, information necessary for roaming, authentication information, and the like), an identifier of the STA, and the like. When the AP 113 and the MFP 100 (the STA) are connected, the AP 113 similarly notifies the Coordinator AP (the AP 111) that a connected state has been established.

After step S607, the connection parameters pertaining to the MFP 100 (STA) transmitted in step S607 are transmitted from the AP 111 to the AP 113. The AP 113 may perform processing to establish a connection with the MFP 100 using the transmitted connection parameters pertaining to the MFP 100 (the STA). However, when using Joint-TX, data can also be transmitted from APs that have not established a connection. In other words, an AP that has not established a connection can also be a source of multiplexed radio waves. As such, the processing for establishing the connection between the AP 113 and the MFP 100 need not be performed.

In step S608, the Coordinator AP (the AP 111) determines transmission parameters (information necessary for determining each Coordinated AP, the transmission timing and transmission output for each antenna, and/or resource unit allocation information, and the like) based on the connection parameters of the Coordinated AP that is connected to the MFP 100 (the STA) (the parameters received in step S607), and subsequently allocates transmission data. The information of the determined transmission parameters is communicated to each Coordinated AP by a multi-AP Trigger frame. The APs 112 and 113 set their own transmission parameters (transmission timing, transmission output, and resource units to be used) based on the communicated information. Note that the multi-AP Trigger frame may have another name. The multi-AP Trigger frame may also be an extension of the Trigger frame defined in the IEEE 802.11ax/be standard.

In step S609, the Coordinator AP (the AP 111) transmits data to be transmitted to the MFP 100 (the STA) (e.g., content data such as image data, document data, print data, and the like) to the Coordinated APs.

In step S610, upon receiving the data to be transmitted from the Coordinator AP (the AP 111), the Coordinated APs (the APs 112 and 113) jointly transmit the data to be transmitted to the MFP 100. Upon receiving the data from the MFP 100 (the STA), the Coordinated APs (the AP 112 and the AP 113) transmit the received data to the Coordinator AP (the AP 111). Note that the order in which this data is transmitted and received is merely one example, and for example, the data from the STA may be received before the data is transmitted to the STA.

Note that the Coordinator AP may directly transmit and receive signals to and from the STA. For example, the AP 111 can operate as a Coordinator AP and a Coordinated AP. In this case, for example, the AP 111 may issue an instruction to the AP 112 or the AP 113 to cause the AP 112 or the AP 113 to exchange wireless frames with the STA while the AP 111 itself exchanges wireless frames with the STA. Note that the Coordinator AP can transmit the data to be transmitted to the Coordinated AP when the wireless frame is to be transmitted from the Coordinated AP. However, the configuration is not limited thereto, and the Coordinated AP may obtain data to be transmitted directly from the Internet, for example. The Coordinator AP may also receive data received by the Coordinated AP from the STA from a Coordinated AP, but the Coordinated AP may transfer the data received from the STA to a partner device of the STA without transferring the data to the Coordinator AP.

Note that any of the APs in the same network can operate as the Coordinator AP, and any one of the APs can be determined to operate as the Coordinator AP according to some criteria. Note that the Coordinator AP does not operate as an AP that transmits the Beacon frame, and may handle only the role of the Coordinator AP, such as sending instructions to each AP. Additionally, each AP may operate as a plurality of Coordinated APs by having a plurality of wireless LAN communication control units 515. The Coordinator AP may be implemented as a logical function, or a single physical AP may operate as a Coordinator AP while operating as one or more Coordinated APs.

Although FIG. 1 illustrates the configuration of a wireless network using a single multi-AP group to describe multi-AP, it is often the case that a plurality of wireless networks are mixed. As a method of connecting the STA (the MFP 100) to a desired AP in an environment where a plurality of wireless networks are present, there is a method in which the plurality of APs detected by the AP search described as step S604 of FIG. 6 are displayed in a list on the console unit 220 of the MFP 100, and the user is allowed to select an AP therefrom. Specifically, for example, the plurality of APs detected through the AP search are displayed in a list on the console unit 220 of the MFP 100 when the "Set Up by Entering Password" method is selected from the menu items in the "Wireless LAN Setup" screen illustrated in FIG. 3D.

However, in communication apparatuses compliant with conventional IEEE 802.11 series standards, a configuration in which an STA connects to a plurality of APs at the same time was not considered, and there is thus a problem in terms of the convenience of connecting to an AP that supports multi-AP communication.

For example, when the plurality of APs detected through the AP search are displayed in a list on the console unit 220, the user was unable to identify whether the APs displayed were APs supporting multi-AP communication. Furthermore, in the case of Joint-TX, the SSID (ESSID) is common within the same multi-AP group, and the group could therefore be displayed as a single AP as in the past, but could not be distinguished from an AP that does not support multi-AP communication. Accordingly, the user of the STA (the MFP 100) may unintentionally select an AP that does not support multi-AP communication, and thus may not be able to enjoy the effects of improvements in the reliability and speed of wireless communication provided by multi-AP communication.

Additionally, for example, when the plurality of APs detected through the AP search are displayed in a list on the console unit 220, whether the APs are APs supporting multi-AP communication is not considered for the order in which the APs are displayed. No consideration has been given to the effects of multi-AP communication, in which a plurality of APs are communicated with at the same time, despite APs detected through AP searches having been listed and displayed in order from the highest radio wave strength in the past. Accordingly, such APs are not distinguished from APs that do not support multi-AP communication, and there is thus a problem in that the user of the STA (the MFP 100) may not be able to enjoy the effects of improvements in the reliability and speed of wireless communication provided by multi-AP communication.

Also, for example, in Co-OFDMA, the SSID (ESSID) may not be common within the same multi-AP group. In such a case, when the plurality of APs detected through the AP search are displayed in a list on the console unit 220, the APs could not be displayed as a single AP using conventional methods. In the past, when a plurality of APs had the same SSID, items indicating the plurality of APs were displayed as a single unit, but this could not be applied in the case of multi-AP communication, in which the SSIDs may be different. There has thus been a problem in that the user of the STA (the MFP 100) may be unable to recognize the method for connecting to the plurality of APs that form the multi-AP group, and may not be able to enjoy the effects of improvements in the reliability and speed of wireless communication provided by multi-AP communication.

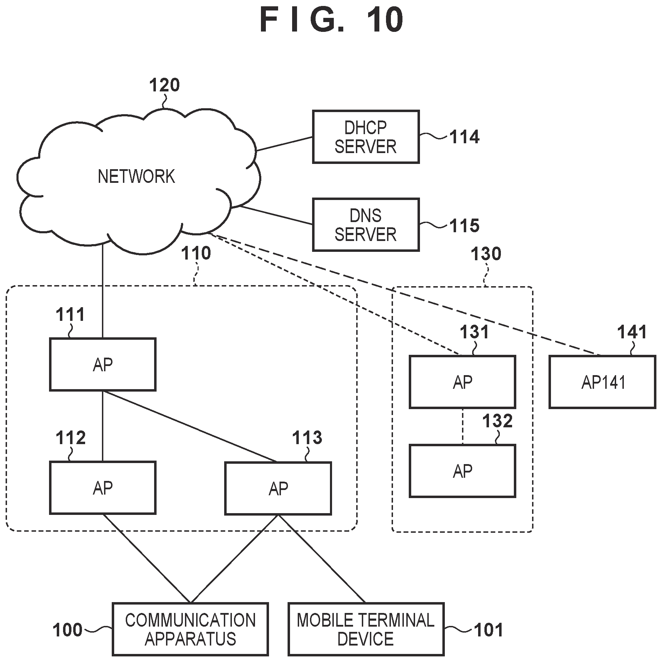

FIG. 10 illustrates an example of the configuration of the system according to the present embodiment. FIG. 10 illustrates a wireless LAN environment in which a plurality of wireless networks are present. FIG. 10 illustrates an example in which, in addition to the multi-AP group 110 illustrated in FIG. 1, another multi-AP group 130 and an AP 141 that does not support multi-AP communication construct respective wireless networks (wireless LANs).

An AP 131 and an AP 132 are APs that, like each AP in the multi-AP group 110, support multi-AP communication, and that form a group (the multi-AP group 130) and operate jointly. Although the multi-AP group 130 will be described as including the AP 131 and the AP 132, the multi-AP group 130 may include more APs than these.

As one example, in the present embodiment, the multi-AP group 110 operates using the Co-OFDMA method. The AP 111 can operate both as a Coordinator AP and a Coordinated AP, and can communicate directly with the STA. The multi-AP group 130 operates using the Joint-TX method. The AP 131 and the AP 132 operate as a Coordinated AP.

Although the present embodiment describes the configuration of the multi-AP groups 110 and 130 as an example, the configuration is not limited to the configurations of the multi-AP groups illustrated in FIG. 10, and for example, the number of multi-AP group wireless networks may be three or more. The multi-AP communication method used by each multi-AP group may be any method. Additionally, the number of APs that do not support multi-AP communication is not limited to the example in FIG. 10, and may be one or more.

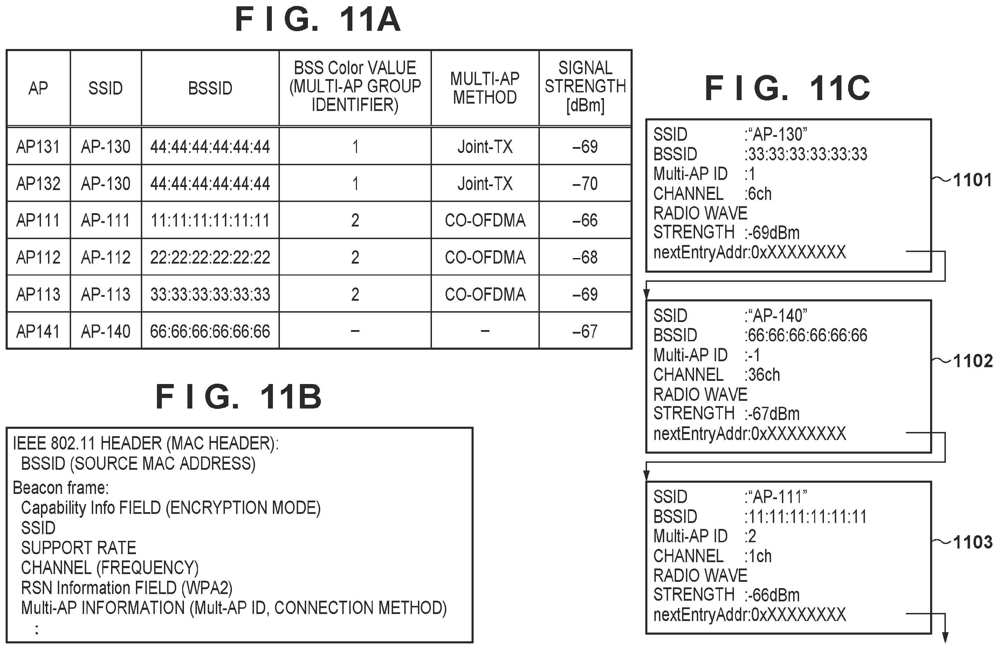

FIG. 11A is a diagram illustrating settings of the wireless network for each AP illustrated in FIG. 10. The AP 131 and the AP 132 form the multi-AP group 130 using the Joint-TX method. For example, "1" is set as the value of BSS Color, which serves as an identifier for the multi-AP group 130, for the AP 131 and the AP 132. With the Joint-TX method, the SSIDs used among the Coordinated APs are the same. The SSID of each of the AP 131 and the AP 132 is set to "AP-130", for example. In Joint-TX, the BSSID is also common within the multi-AP group, and is set to the value of the MAC address of the AP 131, for example.

The AP 111, AP 112, and AP 113 form the multi-AP group 110 through Co-OFDMA. For example, "2" is set as the value of BSS Color, which serves as an identifier for a multi-AP group 110, in the AP 111, AP 112, and AP 113.

With the Co-OFDMA method, the SSIDs used among the Coordinated APs need not be the same. In the present embodiment, a different value is set for each Coordinated AP, for example. For example, "AP-111" is set as the SSID of the AP 111, "AP-112" is set as the SSID of the AP 112, and "AP-113" is set as the SSID of the AP 113. In addition, when using the Co-OFDMA method, the BSSID is different among the Coordinated APs. For example, the BSSID of each of the AP 111, the AP 112, and the AP 113 is set to the value of the MAC address of that AP.

The AP 141 is an AP that does not support multi-AP communication. The AP 141 does not have a setting with respect to a multi-AP group, and information corresponding to the multi-AP IE is therefore not included in the Probe Response frame.

The settings of the wireless network corresponding to each AP include a signal strength. The signal strength is a radio signal strength (RSSI) detected by the wireless unit 250 when an AP search is performed and a Probe Response frame is received from each AP. The unit of the radio wave strength is dBm.

The wireless network settings illustrated in FIG. 11A are merely examples, and for example, the wireless network settings for each AP may be different from those illustrated in FIG. 11A.

Processing performed for switching the method of displaying APs in accordance with the communication methods of the APs discovered through a search will be described hereinafter, for when the MFP 100 searches for APs to establish wireless LAN communication and displays search results.

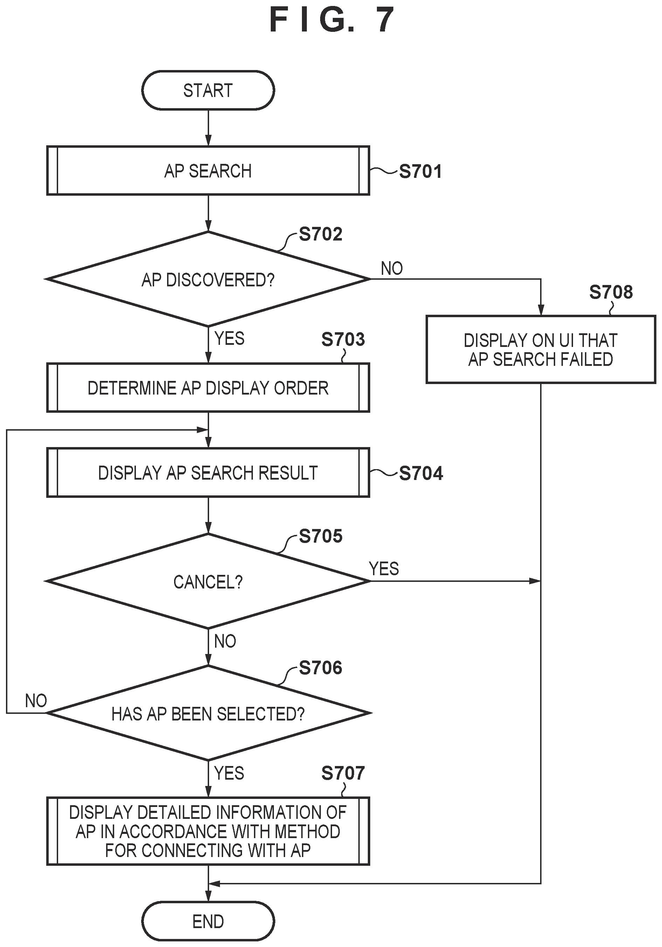

FIG. 7 is a flowchart illustrating a process in which the MFP 100 searches for APs, sorts the discovered APs based on a predetermined condition, displays a list of sorted APs in accordance with the communication methods of the APs, and accepts the selection of an AP to which a connection is to be made. The processing in FIG. 7 is implemented, for example, by the CPU 212 reading out a program stored in the ROM 213 into the RAM 214 and executing that program.

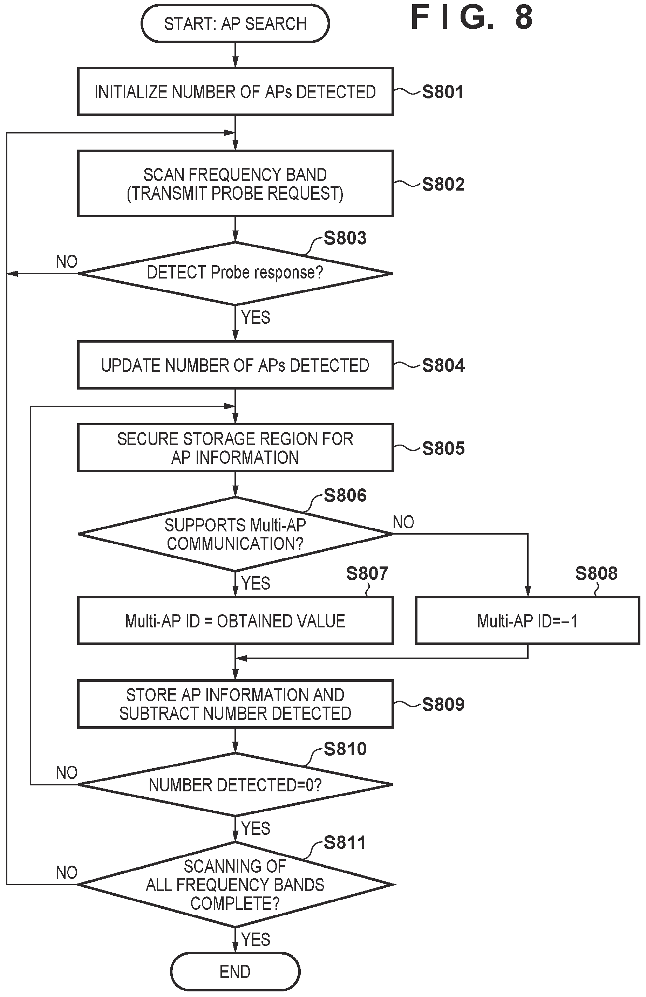

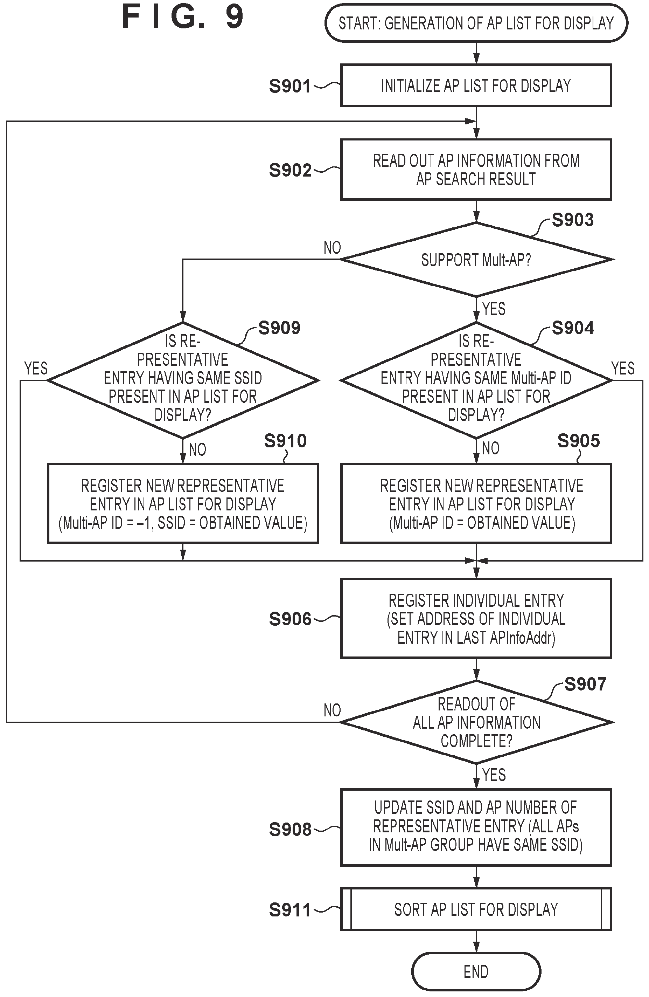

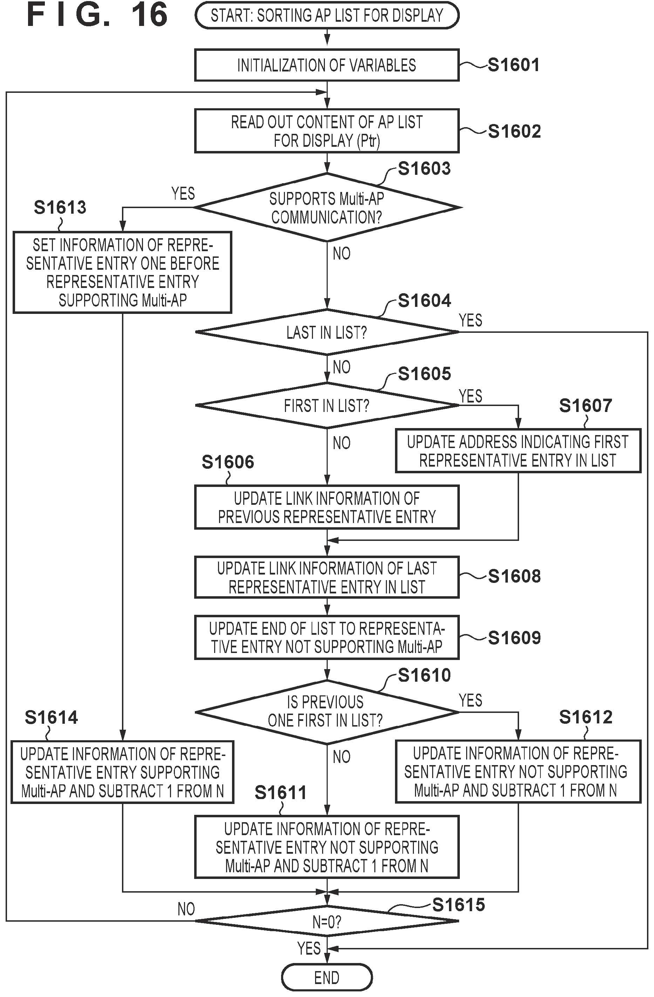

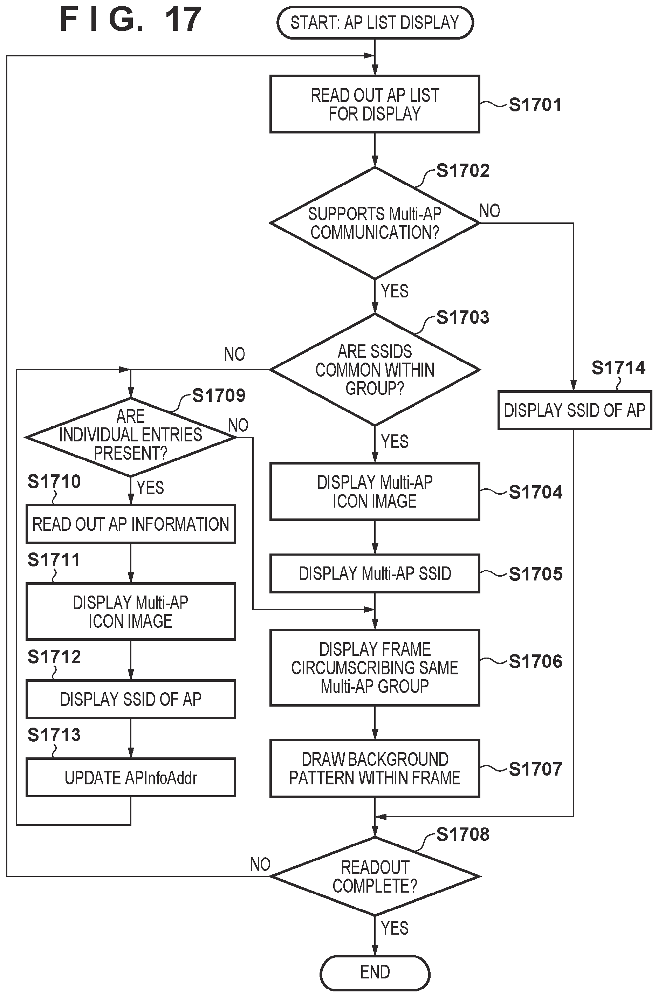

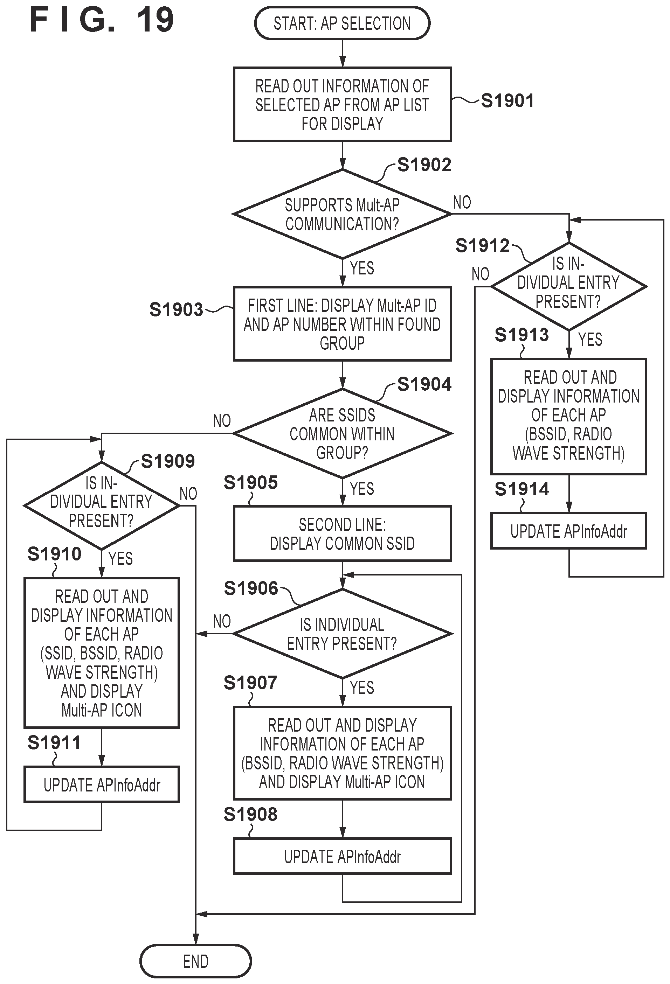

AP search processing performed in step S701 will be described in detail later with reference to FIG. 8. Processing for determining an AP display order in step S703 will be described in detail later with reference to FIGS. 9 and 16. Processing for displaying an AP search result (a list of APs discovered through the AP search) in step S704 will be described in detail later with reference to FIG. 17. Processing for displaying the detailed information of the AP in step S707 will be described in detail later with reference to FIG. 19.

Note that the processing of FIG. 7 is executed when the user selects the "Set Up by Entering Password" item from the menu items in the "Wireless LAN Setup" screen in FIG. 3D. However, the timing at which the processing is executed in FIG. 7 is not limited thereto. The processing illustrated in FIG. 7 may be executed when, for example, the MFP 100 detects a connection with an AP has been cut off and fails to reconnect with the AP. Additionally, the processing illustrated in FIG. 7 may be executed, for example, after the MFP 100 has been shipped, when the MFP 100 is initially installed, or the like.

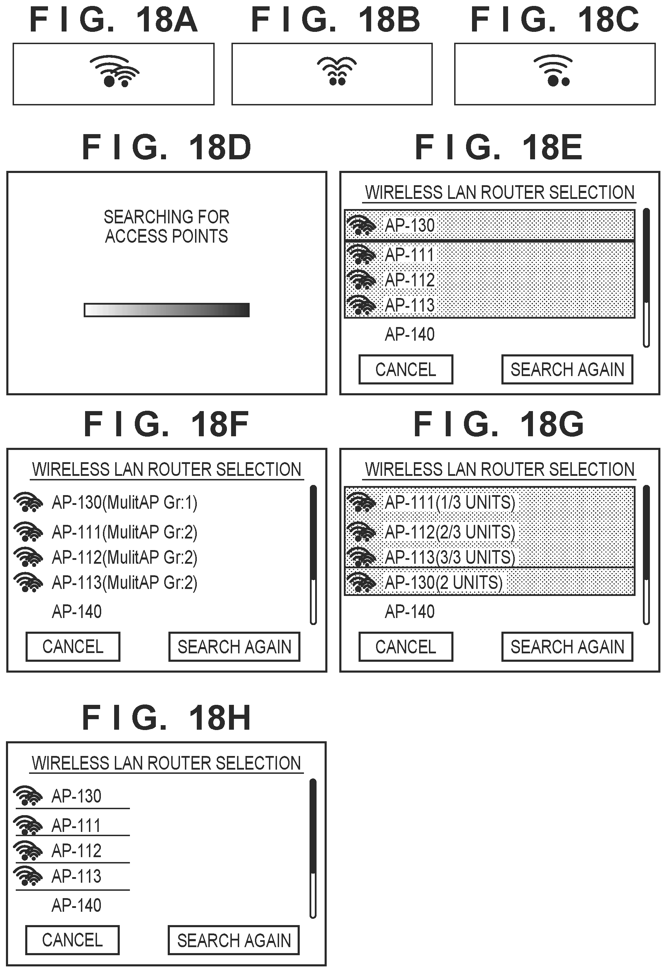

In step S701, the CPU 212 searches for an AP external to the MFP 100 in order to connect to the AP in wireless infrastructure mode. As will be described later, the CPU 212 searches for the AP by using the communication control unit 240 to sequentially switch between frequency bands and channels supported by the wireless unit 250 while scanning. When an AP is discovered through the AP search, the CPU 212 obtains information pertaining to the discovered AP. The information pertaining to the AP may be called "AP information" hereinafter. The CPU 212 stores the obtained AP information in the RAM 214 as a detected AP list. The detected AP list is a list of information pertaining to the APs discovered through the AP search. The detected AP list will be described in detail later with reference to FIG. 11C. Note that the CPU 212 may display a screen indicating that the AP search is underway on the console unit 220 while the communication control unit 240 is searching for APs. FIG. 18D illustrates an example of a screen displayed on the console unit 220 indicating that an AP search is underway.

In step S702, the CPU 212 determines whether an AP has been discovered through the AP search performed in step S701. If the CPU 212 determines that an AP has been discovered, the sequence moves to step S703. However, if the CPU 212 determines that an AP has not been discovered, the sequence moves to step S708. Specifically, the CPU 212 refers to the AP detection list stored in the RAM 214, and determines that an AP has been discovered if at least one item of AP information is included in the detected AP list. However, if not even one item of AP information is included, the CPU 212 determines that an AP has not been discovered.

In step S703, the CPU 212 determines a display order in which to display the list of APs discovered through the AP search. In step S703, the CPU 212 sorts the detected AP list based on whether the AP is an AP that at least supports multi-AP communication, and generates an AP list for displaying the AP search results (called an "AP list for display" hereinafter). If a plurality of APs are included in the detected AP list, the AP list for display is generated based on whether the APs are APs that support multi-AP communication.

In step S704, the CPU 212 refers to the AP list for display sorted in step S703, and displays an AP search result screen on the console unit 220. The AP search result screen is a screen that displays a list of external APs discovered through the AP search. When displaying the list of external APs discovered through the AP search, the CPU 212 controls the display such that the list of APs is displayed in the display order determined in step S703. Additionally, when displaying the list of external APs discovered through the AP search, the CPU 212 controls the display such that information pertaining to the APs that support a multi-AP communication method is displayed so as to be distinguishable from information pertaining to APs that do not support a multi-AP communication method. The CPU 212 then stands by for a user operation on the AP search result screen. An example of the screen displayed on the console unit 220 in step S704 will be described later with reference to FIG. 18E.

In step S705, the CPU 212 determines whether to cancel the display of the AP list. If the CPU 212 determines to cancel, the home screen is displayed on the console unit 220, and the processing of FIG. 7 ends. However, if the CPU 212 determines not to cancel, the sequence moves to step S706. For example, if a "back" key or the "home" key (not shown) provided in the console unit 220 is detected to have been pressed, the CPU 212 determines to cancel, and if not, the CPU 212 determines not to cancel.

In step S706, the CPU 212 determines whether an AP has been selected in the AP search result screen. If the CPU 212 determines that an AP has been selected, the sequence moves to step S707. However, if the CPU 212 determines that an AP has not been selected, the sequence moves to step S704.

In step S707, the CPU 212 displays an AP information details screen on the console unit 220, based on the AP information obtained through the AP search. The details screen is a screen that displays details of the information pertaining to the AP selected by the user from the list of APs (the AP search result screen). The CPU 212 then stands by for a connection instruction to be made in the details screen. If the AP selected by the user supports multi-AP communication, the CPU 212 displays detailed information pertaining to the APs included in the multi-AP group to which the AP belongs on the console unit 220.

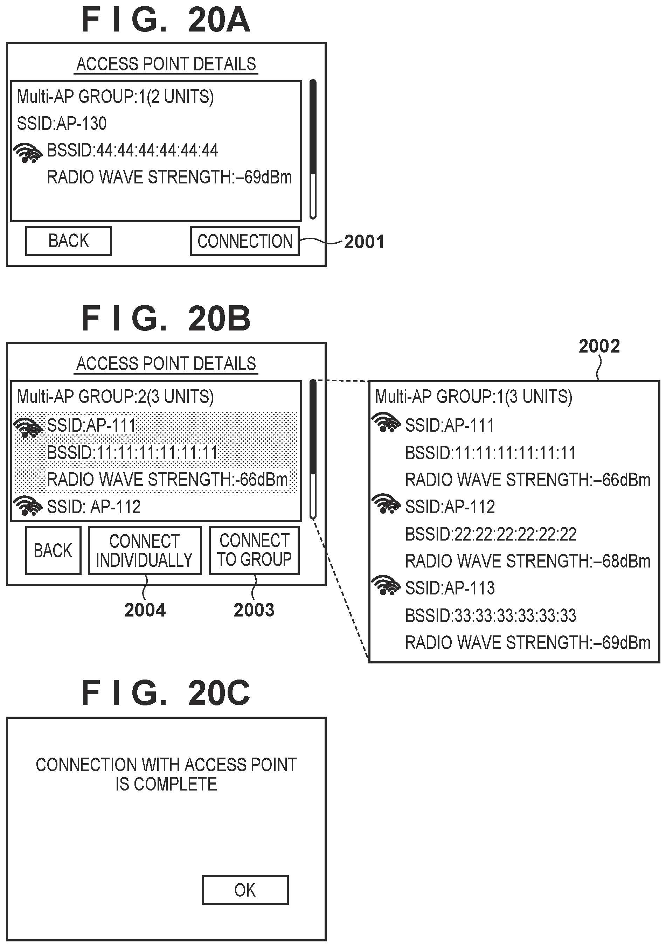

In the present embodiment, when the detailed information of the APs corresponding to the multi-AP communication is displayed on the console unit 220, the CPU 212 displays a button capable of accepting a selection for connecting to all APs belonging to the same multi-AP group discovered through the AP search, and buttons capable of accepting selections for selecting and connecting to individual desired APs in the group. An example of the details screen will be described later with reference to FIGS. 20A and 20B.

If an AP that does not support multi-AP communication is selected by the user from the AP list, the CPU 212 may start connection processing with the AP that does not support multi-AP communication without displaying the detailed information screen.

In step S708, the CPU 212 displays a screen indicating that the AP search has failed (not shown) on the console unit 220.

### AP Search Processing

FIG. 8 is a flowchart illustrating, in detail, the AP search processing performed in step S701 of FIG. 7. The processing in FIG. 8 is implemented, for example, by the CPU 212 reading out a program stored in the ROM 213 into the RAM 214 and executing that program.

In step S801, the CPU 212 initializes a variable "number of APs detected (discovered)", for storing the number of items of AP information discovered through the AP search, to 0. Note that the variable "number of APs detected" is secured in heap memory allocated to a predetermined region within the RAM 214, or in a stack region.

Next, the CPU 212 searches for APs by each channel in the frequency band supported by the wireless unit 250 through the processing performed after step S802, and obtains the AP information of the APs discovered through the search. The CPU 212 then stores the obtained AP information in the RAM 214.

In step S802, the CPU 212 searches for APs by transmitting a device search request (Probe Request) frame while sequentially switching the frequency band and the channel. Note that the Probe Request frame includes information such as an SSID (wildcard SSID) specified as a length of 0 (i.e., blank), security information, a supported data rate, and the like. If the AP receives a Probe Request frame in which the SSID is blank, all the APs aside from the APs for which the SSID is not set return a device search response (Probe Response) frame. Furthermore, the CPU 212 detects the device search response (Probe Response) frames transmitted from the APs.

In step S803, the CPU 212 determines whether a device search response (Probe Response) frame transmitted from an AP has been detected. If the CPU 212 determines that the frame has been detected, the sequence moves to step S804. However, if the CPU 212 determines that the frame has not been detected, the sequence returns to step S802 to transmit the Probe Request frame in the next frequency band and channel. Although the present embodiment describes an example in which an AP search is performed by transmitting a Probe Request frame, the AP search may be performed by detecting a Beacon frame (information transmitted by the AP voluntarily at regular intervals).

The information (AP information) pertaining to the AP obtained from the AP through the AP search includes information indicating at least one of the SSID, the radio wave strength (RSSI), the communication quality (SNR), the data rate (link speed), the frequency band, the MAC address, the authentication mode, the encryption mode, and the like. The information to which the APs supporting multi-AP communication respond further includes the multi-AP-related information (the multi-AP IE) described with reference to FIG. 6.

FIG. 11B illustrates an example of some of the information pertaining to an AP included in the Probe Response frame or Beacon frame obtained by the CPU 212. An AP supporting multi-AP communication includes at least the BSSID (MAC address) of the AP in the MAC header part, as per the format specified by the IEEE 802.11 standard. The Beacon Frame includes a Capability Info field indicating the encryption mode, an RSN Information field, an SSID, a support rate (theoretical value of the link speed), and the multi-AP IE. The BSS color value (multi-AP identifier) for multi-AP communication included in the multi-AP IE will be referred to as a "multi-AP ID" hereinafter. The multi-AP ID is an identifier having a unique value for each multi-AP group, and is an identifier for identifying the multi-AP group.

In step S804, the CPU 212 updates the "number of APs detected" to the number of APs detected for a single Probe Request frame. In other words, in step S804, the CPU 212 updates the number of APs discovered through the AP search. Here, if a plurality of APs are operating on the same channel, the number of APs detected is a value of 2 or more.

In step S805, the CPU 212 allocates, from the heap memory in the RAM 214, the required amount for storing the AP information, based on the Probe Response frame or the Beacon frame obtained from the AP.

FIG. 11C illustrates an example of the AP information obtained from an AP discovered through the AP search and stored in the memory of the RAM 214. FIG. 11C illustrates three items of AP information 1101 to 1103. When storing the AP information in the memory of the RAM 214, the CPU 212 sets a nextEntryAddr member, which is an address indicating the storage destination of the next AP information to be stored. The nextEntryAddr member is, in other words, link information for linking a plurality of items of AP information. When storing the AP information, the CPU 212 stores the AP information in the memory in the RAM 214 as a list structure (the detected AP list) by setting nextEntryAddr. In the present embodiment, the address in the memory space in the RAM 214 is expressed as an eight-digit hexadecimal number, and in FIG. 11C, the address is denoted as "0xXXXXXXXX". The AP information stored in the memory of the RAM 214 includes the information included in the Probe Response frame, the nextEntryAddr member for building the list structure, and the multi-AP ID for identifying the multi-AP group.

In step S806, the CPU 212 determines whether the AP discovered through the AP search supports multi-AP communication. If the CPU 212 determines that multi-AP communication is supported, the sequence moves to step S807. However, if the CPU 212 determines that multi-AP communication is not supported, the sequence moves to step S808. The CPU 212 makes this determination based on whether the multi-AP IE is present in the Probe Response frame obtained through the AP search. If the multi-AP IE is present, the CPU 212 determines that the AP discovered through the AP search supports multi-AP communication, and if the multi-AP IE is not present, the CPU 212 determines that the AP discovered through the AP search does not support multi-AP communication.

In step S807, the CPU 212 stores information indicating that the AP discovered through the AP search is an AP that supports multi-AP communication. Specifically, the CPU 212 stores the value of the multi-AP ID obtained from the AP in the multi-AP ID member in the AP information.

In step S808, the CPU 212 stores information indicating that the AP discovered through the AP search is an AP that does not support multi-AP communication. Specifically, the CPU 212 stores a value of "-1" indicating that the AP that returned the Probe Response frame does not support multi-AP communication.

In step S809, for members other than the multi-AP ID as well, the CPU 212 stores the information included in the Probe Response frame by copying the information to the predetermined members in the AP information. The CPU 212 then subtracts 1 from the number of APs detected.

In step S810, the CPU 212 determines whether the number of APs detected is 0. If the number of APs detected is determined to be 0, the sequence moves to step S811. However, if the CPU 212 determines that the number is not 0, the sequence returns to step S805 in order to process an unprocessed Probe Response frame.

In step S811, the CPU 212 determines whether scanning of all frequency bands and channels supported by the wireless unit 250 is complete. If the CPU 212 determines that the scanning is complete, the processing of FIG. 8 ends. However, if the CPU 212 determines that the scanning is not complete, the sequence returns to step S802 to transmit the Probe Request frame in the next frequency band and channel.

Through the processes described above, the CPU 212 stores the AP information by securing the necessary amount of memory from the heap memory in the RAM 214 each time an AP is discovered through the AP search. When an AP is discovered through the AP search, the CPU 212 sets the nextEntryAddr member in the AP information of the discovered APs in sequence. In other words, when a plurality of APs are discovered through the AP search, the CPU 212 stores the plurality of items of AP information in the RAM 214 as a concatenated list of detected APs. Through such an AP search process, a list of detected APs is generated in the order in which the APs were discovered through the AP search, as illustrated in FIG. 11C.

The content of the AP information obtained from the AP varies depending on the AP model, model number, settings, and the like. The information of the AP may also be excluded from the search results if the AP does not support the security mode (authentication mode or encryption mode) supported by the MFP 100. The information of the AP may also be excluded from the search results if the security mode supported by the AP is only a security mode not supported and/or restricted by the MFP 100.

### Generation of AP List for Display

FIG. 9 is a flowchart illustrating, in detail, the processing performed in step S703 of FIG. 7. The processing in FIG. 9 is implemented, for example, by the CPU 212 reading out a program stored in the ROM 213 into the RAM 214 and executing that program. The processing illustrated in FIG. 9 includes processing for generating the AP list for display (steps S901 to S910) and processing for sorting the AP list for display based on a predetermined condition pertaining to multi-AP communication (step S911). The processing of step S911 will be described in detail later with reference to FIG. 16.

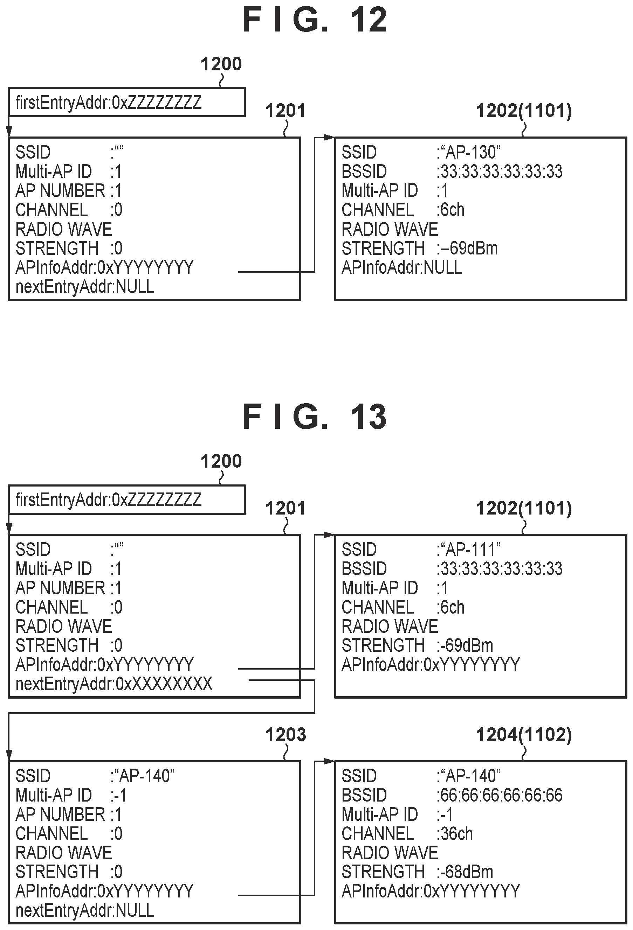

FIGS. 12 to 15 illustrate an example of the AP list for display generated in the RAM 214 when the CPU 212 performs the processing illustrated in FIG. 9, taking the case where the AP information obtained through the AP search is configured as illustrated in FIG. 11A as an example.

In step S901, the CPU 212 initializes the AP list for display. The AP list for display is a list in which the list configuration is sorted such that APs that support multi-AP communication can be managed in units of multi-AP groups, based on the detected AP list generated through the AP search process (see FIG. 11C). The AP list for display is secured from the heap memory allocated to a predetermined region within the RAM 214 each time, as with the detected AP list.

The AP list for display is constituted of a representative entry to which a single region is assigned per multi-AP group and individual entries that include AP information of the Coordinated APs belonging to that multi-AP group. The configuration of the AP list for display will be described in detail later with reference to FIGS. 12 to 15.

In step S901, the CPU 212 sets the value of firstEntryAddr, which is an address indicating the storage destination of the first (top) representative entry in the AP list for display, to NULL. Note that firstEntryAddr is stored in the memory allocated in the RAM 214 as the header part of the AP list for display.

In step S902, the CPU 212 reads out the AP information included in the detected AP list (see FIG. 11C) in order from the top.

In step S903, the CPU 212 determines whether the AP is an AP supporting multi-AP communication based on the value of the multi-AP ID in the read-out AP information. If the CPU 212 determines that the AP supports multi-AP communication, the sequence moves to step S904. However, if the CPU 212 determines that the AP does not support multi-AP communication, the sequence moves to step S909. In the present embodiment, in step S808 of FIG. 8, the CPU 212 sets "-1" in the multi-AP ID for an AP that does not support multi-AP communication. Accordingly, if the value of the multi-AP ID is not "-1", the CPU 212 determines that the AP supports multi-AP communication. However, if the value of the multi-AP ID is "-1", the CPU 212 determines that the AP does not support multi-AP communication.

In step S904, the CPU 212 determines whether a representative entry having the same value as the multi-AP ID contained in the AP information read out from the detected AP list in step S902 is present in the AP list for display currently being generated. If the CPU 212 determines such a representative entry is not present, the sequence moves to step S905. However, if the CPU 212 determines that a representative entry having the same value as the multi-AP ID is present, the sequence moves to step S906.

In step S905, the CPU 212 stores a new representative entry in the AP list for display based on the AP information read out from the detected AP list in step S902. The CPU 212 secures a memory region for storing the representative entry in the AP list for display, and stores the multi-AP ID included in the AP information read out in step S902 as the multi-AP ID in the representative entry.

In the present embodiment, the representative entry includes members such as the SSIDs of the APs belonging to the multi-AP group and an AP number indicating the number of Coordinated APs belonging to the same multi-AP group in addition to the multi-AP ID for identifying the multi-AP group. Note that if the multi-AP communication method is Co-OFDMA, the SSIDs of the plurality of APs belonging to the same multi-AP group may be different. Accordingly, when registering the representative entry of the APs using Co-OFDMA as the multi-AP communication method, NULL is set for the SSID member. Additionally, channel information, the radio wave strength, and the like obtained from the AP information may be included in the representative entry, but at the time of registration, "0" is set to indicate no setting has been made. Other information pertaining to the APs, such as a security modes supported by the APs, may be stored in the representative entry.

Furthermore, when registering the representative entry, the CPU 212 sets nextEntryAddr (link information), which is an address indicating the storage destination of the next representative entry. When registering a new representative entry, the CPU 212 sets an address indicating the storage destination of the newly-registered representative entry in the last representative entry in the AP list for display. However, in the case of the first representative entry, the address indicating the storage destination of the first representative entry is set in firstEntryAddr that was initialized to NULL in step S901. In this manner, the CPU 212 generates the AP list for display by setting link information for a plurality of representative entries to link the AP list. The AP list for display can be searched by referring to the following representative entries in order from firstEntryAddr and following nextEntryAddr in sequence.

Additionally, to hold the information of the Coordinated APs included in the same multi-AP group in a list structure, APInfoAdd, which is an address indicating the storage destinations of the individual entries, is set in the representative entry.

In step S906, the CPU 212 registers an individual entry including the AP information of the Coordinated AP. Here, like the representative entry, each individual entry is stored in heap memory allocated to a predetermined region within the RAM 214. Each individual entry stores information of an individual AP based on the AP information obtained through the AP search. In the present embodiment, the individual entry includes information such as the SSID, BSSID, channel, radio wave strength, and the like of the AP. Other information pertaining to the AP, such as the security modes supported by the AP, may be stored in the individual entry. The individual entry also includes the member APInfoAdd for holding the information of the other Coordinated APs in the same multi-AP group in a list structure.

The CPU 212 then sets an address indicating the storage destination of the newly-registered individual entry in APInfoAddr member in the representative entry registered in step S905, and ends the processing for that single item of AP information.

FIG. 12 is a schematic diagram illustrating a state in which a first representative entry 1201 and an individual entry 1202 are registered in the memory of the RAM 214. An address indicating the storage destination of the first representative entry 1201 is set in a firstEntryAddr 1200. An address indicating the storage destination of the individual entry 1202 is set in the first representative entry 1201. In the example in FIG. 12, no second representative entry is registered. Accordingly, the address indicating the storage destination of the next representative entry is set to NULL in the first representative entry 1201. An address indicating the storage destination of the individual entry 1202 is set in the representative entry 1201. Additionally, in the example in FIG. 12, no second individual entry is registered. Accordingly, no address indicating the next individual entry is set in the first individual entry 1202.

In step S909, the CPU 212 determines whether the SSID included in the AP information read out in step S902 and a representative entry having the same SSID are present (registered) in the AP list for display currently being generated. If the CPU 212 determines that these items are present, the sequence moves to step S906. However, if the CPU 212 determines that these items are not present, the sequence moves to step S910. The difference from step S904 is that the determination as to whether to register the representative entry is made based on the SSID rather than the multi-AP ID.

In step S910, the CPU 212 registers (stores) the representative entry read out in step S902 as a new representative entry in the AP list for display. The processing of step S910 is the same as the processing of step S905, except that the member multi-AP ID of the representative entry is "-1", and the SSID is stored.

FIG. 13 illustrates a state in which a second representative entry 1203 and an individual entry 1204 have been registered in the AP list for display based on the AP information pertaining to the AP 141. An address indicating the storage destination of the second representative entry 1203 is set in the first representative entry 1201. An address indicating the storage destination of the individual entry 1204 is set in the second representative entry 1203. Additionally, in the example in FIG. 13, the third representative entry is not registered in the AP list for display, and thus the address indicating the storage destination of the next representative entry is set to NULL in the second representative entry 1203.

In step S907, the CPU 212 refers to the detected AP list in order and determines whether the readout of all the AP information is complete. If the CPU 212 determines that the readout is complete, the sequence moves to step S908. However, if the CPU 212 determines that the readout is not complete, the sequence moves to step S902. In step S907, if nextEntryAddr in the AP information in the detected AP list (see FIG. 11C) is NULL, the CPU 212 determines that the readout of all the AP information is complete, and if not, determines that the readout is not complete.

In step S908, if only one individual entry is linked to each representative entry, if the AP in the individual entry has the same setting value, or the like, the CPU 212 updates the members in the representative entry with the same setting values. For example, if the representative entry is an entry for a multi-AP group, and if the multi-AP communication method is Joint-TX, the SSID, BSSID, and channel are common for all APs, and that AP information is therefore also stored in the representative entry. By storing the common AP information in the representative entry in this manner, the CPU 212 can refer to and display the information of the multi-AP group without referring to each individual entry. If a plurality of individual entries are linked to the representative entry, the CPU 212 updates the "AP number" member in the representative entry using the number of individual entries.

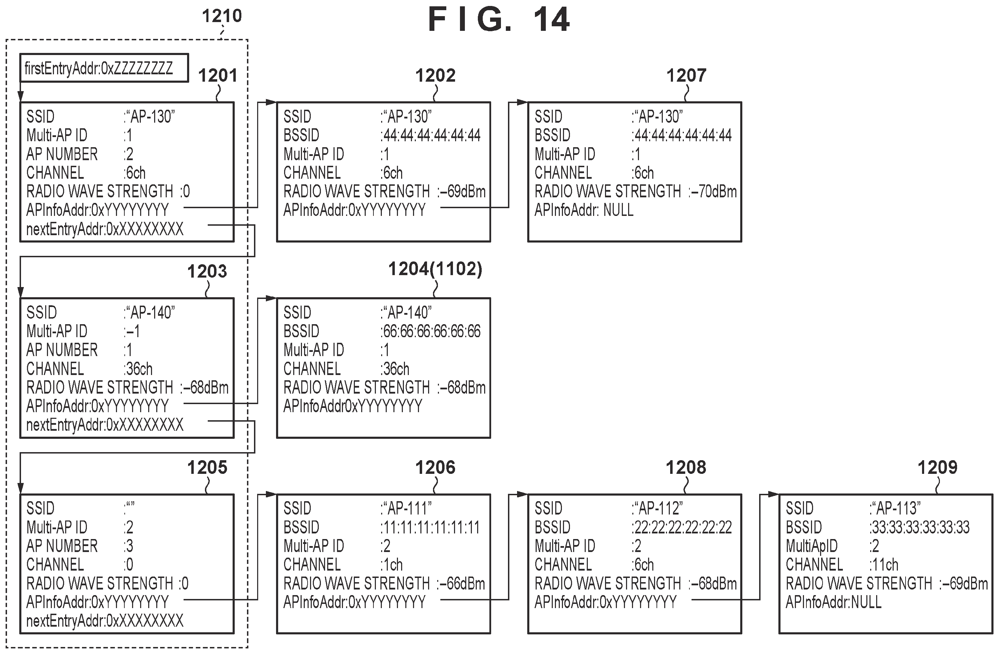

FIG. 14 illustrates an example of the configuration of the AP list for display in which a representative entry and an individual entry are registered for all APs discovered through an AP search. FIG. 14 illustrates a state in which the representative entry 1201 of a multi-AP group in which the SSID is common within the group and the representative entry 1203 of the single AP 141 that does not support multi-AP communication are updated in the AP list for display. Here, a representative entry 1205 is an entry of the multi-AP group 110. In the multi-AP group 110, the SSIDs and channels differ among the Coordinated APs, and thus the information (members) of the representative entry 1205 remain as the values present at the time of registration.

In step S911, the CPU 212 refers to the AP list for display generated through the processing of steps S901 to S910, and executes processing for sorting the AP list for display based on a predetermined condition pertaining to multi-AP. The processing of step S911 will be described hereinafter with reference to FIG. 16.

### Sorting AP List for Display

FIG. 16 is a flowchart illustrating an example of the processing performed in step S911 of FIG. 9. FIG. 16 is a diagram illustrating details of the processing for sorting the AP list for display based on a predetermined condition pertaining to multi-AP. In the present embodiment, the predetermined condition is that APs that support multi-AP communication are prioritized over APs that do not support multi-AP communication, and the display order is sorted to display such APs at the top of the displayed list. The processing in FIG. 16 is implemented, for example, by the CPU 212 reading out a program stored in the ROM 213 into the RAM 214 and executing that program.

In step S1601, the CPU 212 initializes variables temporarily used to sort the AP list for display. Note that variables used in the same processing are also stored in memory allocated to a predetermined region within the RAM 214. The variables temporarily used to sort the AP list for display include Ptr, lastEnt, prevPtr, and N. Ptr is a variable indicating the address of the representative entry being processed. lastEnt is a variable indicating the address of the last representative entry in the displayed AP list. prevPtr is a variable indicating the address of the representative entry one place before the representative entry being processed. N is a variable indicating the number of representative entries. In the case of FIG. 11C, in the initialization processing, the address stored in firstEntryAddr, i.e., the address of the first representative entry 1201, is set in Ptr, and N is set to 3. Meanwhile, the address of firstEntryAddr is set for prevPtr.

Next, through the processing of steps S1602 to S1615, the CPU 212 sequentially refers to the AP list for display a number of times equivalent to the number N of representative entries, and performs processing for sending the representative entries of APs that do not support multi-AP communication to the end of the AP list for display. The representative entries included in the AP list for display are considered to have a C language structure. In the following descriptions, the sign "->" indicates the addresses of the members of the structure. Furthermore, in the following descriptions, an expression having a sign "*" added to a member name indicates that the member of the structure corresponds to a C language pointer, and indicates an address in a memory space stored in the region for that member.

In step S1602, the CPU 212 reads out the content of the AP list for display. Specifically, the CPU 212 reads out the content of the representative entry indicated by the variable Ptr.

In step S1603, the CPU 212 determines whether the representative entry read out from the AP list for display is a representative entry of an AP that supports multi-AP communication. If the CPU 212 determines that the representative entry is not for an AP that supports multi-AP communication, the sequence moves to step S1604. However, if the CPU 212 determines that the representative entry is for an AP that supports multi-AP communication, the sequence moves to step S1613. Specifically, if the member multi-AP ID of the representative entry indicated by the variable Ptr is "-1", the CPU 212 determines that the representative entry does not support multi-AP communication. However, if the member multi-AP ID of the representative entry indicated by the variable Ptr is not "-1", the CPU 212 determines that the representative entry supports multi-AP communication.

If the representative entry read out from the AP list for display is a representative entry of an AP that does not support multi-AP communication, in steps S1605 to S1612, the CPU 212 sorts the representative entries so as to be linked to the end of the AP list for display. However, if the representative entry indicated by the variable Ptr is a representative entry of an AP that supports multi-AP communication, the CPU 212 determines that sorting is not necessary for that representative entry, and updates the values of prevPtr and Ptr, respectively, in steps S1613 and S1614.

In step S1604, the CPU 212 determines whether the representative entry of the AP that does not support multi-AP communication is the last entry in the AP list for display. If the CPU 212 determines that the AP is the last in the AP list for display, the processing in FIG. 16 ends. However, if the CPU 212 determines that the AP is not the last in the AP list for display, the sequence moves to step S1605. Specifically, in step S1604, the CPU 212 performs processing indicated by "Ptr -> nextEntryAddr = NULL?". If nextEntryAddr of the representative entry of the AP that does not support multi-AP communication is not NULL, the CPU 212 determines that the AP is not the last in the AP list for display. However, if nextEntryAddr of the representative entry of the AP that does not support multi-AP communication is NULL, the CPU 212 determines that the AP is the last in the AP list for display.

In step S1605, the CPU 212 determines whether the representative entry of the AP that does not support multi-AP communication is the first (top) representative entry in the AP list for display. If the CPU 212 determines that the entry is not the first representative entry, the sequence moves to step S1607. However, if the CPU 212 determines that the entry is the first representative entry, the sequence moves to step S1606. Specifically, in step S1605, the CPU 212 performs processing indicated by "prevPtr = firstEntryAddr?". If prevPtr of the representative entry of the AP that does not support multi-AP communication is the same address as firstEntryAddr, the CPU 212 determines that the representative entry is the first entry. However, if prevPtr of the representative entry of the AP that does not support multi-AP communication is not the same address as firstEntryAddr, the CPU 212 determines that the representative entry is not the first entry.

In step S1606, the CPU 212 sets the link information of the representative entry one previous to the representative entry of the AP that does not support multi-AP communication to the address of the representative entry one after the representative entry of the AP that does not support multi-AP communication. Specifically, in step S1606, the CPU 212 performs processing indicated by "prevPtr -> nextEntryAddr = *Ptr -> nextentryaddr". In other words, the CPU 212 updates the value of prevPtr -> nextEntryAddr.

In step S1607, the CPU 212 sets the address of the first representative entry in the AP list to indicate the representative entry one after the representative entry of the AP that does not support multi-AP communication. Specifically, the CPU 212 performs processing indicated by "firstEntryAddr = *Ptr -> nextEntryAddr". In other words, the CPU 212 updates firstEntryAddr to point to the representative entry one after the representative entry of the AP that does not support multi-AP communication.

In step S1608, the CPU 212 sets the link destination of the last representative entry in the AP list for display to the address of the representative entry of the AP that does not support multi-AP communication. Specifically, the CPU 212 performs processing indicated by "lastEnt -> nextEntryAddr = Ptr". In other words, the CPU 212 updates the link information (nextEntryAddr) in the last representative entry in the AP list for display, pointed to by the variable lastEnt, to the value of the address (Ptr) of the representative entry of the AP that does not support multi-AP communication.

In step S1609, the CPU 212 substitutes the value of Ptr for the variable lastEnt, updates the variable to indicate the end of the list, and updates nextEntryAddr to NULL to indicate the last entry in the AP list for display. Specifically, the CPU 212 performs processing indicated by "lastEnt = Ptr" and "lastEnt -> nextEntryAddr = NULL". The CPU 212 then updates nextEntryAddr to NULL to indicate the last in the AP list for display.

After that, in the processing of steps S1610 to S1612, the CPU 212 updates the value of the variable Ptr in order to proceed to processing the subsequent representative entry, but the processing branches according to whether the representative entry indicated by Ptr was the first representative entry in the AP list for display.

In step S1610, the CPU 212 determines whether the address indicating the representative entry one previous to the representative entry of the AP that does not support multi-AP communication is the same as the address indicating the first representative entry in the AP list for display. If the CPU 212 determines that the address is the same, the sequence moves to step S1612. However, if the CPU 212 determines that the address is not the same, the sequence moves to step S1611. Specifically, the CPU 212 performs processing indicated by "prevPtr = firstEntryAddr?". In other words, the CPU 212 determines whether prevPtr is the same address as firstEntryAddr.

In step S1611, the CPU 212 updates the representative entry of the AP that does not support multi-AP communication to the value updated in step S1606. Specifically, the CPU 212 performs processing indicated by "Ptr = *prevPtr -> nextEntryAddr" and "N = N - 1". In other words, the CPU 212 subtracts 1 from N.

In step S1612, the CPU 212 updates Ptr to the value stored in firstEntryAddr, which has been updated in step S1607, and subtracts 1 from N. Specifically, the CPU 212 performs processing indicated by "Ptr = *firstEntryAddr" and "N = N - 1". The entry is updated to point to a subsequent representative entry through the processing of steps S1611 and S1612.

In step S1613, the CPU 212 sets the link destination of the representative entry one previous to the representative entry of the AP that supports multi-AP communication to the address of the representative entry of the AP that supports multi-AP communication. Specifically, in step S1613, the CPU 212 performs processing indicated by "prevPtr = Ptr".

In step S1614, the CPU 212 sets the link destination of the representative entry of the AP that supports multi-AP communication to an address indicating a representative entry one after the representative entry of the AP that supports multi-AP communication. The CPU 212 then subtracts 1 from N. Specifically, the CPU 212 performs processing indicated by "Ptr = *Ptr -> nextEntryAddr" and "N = N - 1".

In step S1615, the CPU 212 determines whether N is 0. If the CPU 212 determines that N is 0, the processing in FIG. 16 ends. If the CPU 212 determines that N is not 0, an unprocessed representative entry remains, and thus the sequence returns to step S1602.

In step S1615, the CPU 212 determines whether N is 0. If the CPU 212 determines that N is 0, the processing is complete for all representative entries, and the processing in FIG. 16 therefore ends. If the CPU 212 determines that N is not 0, an unprocessed representative entry is present, and thus the sequence returns to step S1602.

As described above, through the processing of steps S1604 to S1612, the representative entries of the APs that do not support multi-AP communication are sorted so as to be linked to the end of the AP list for display. In other words, through the processing of steps S1604 to S1612, APs that support multi-AP communication are sorted so as to be ranked above APs that do not support multi-AP communication in the AP list for display.

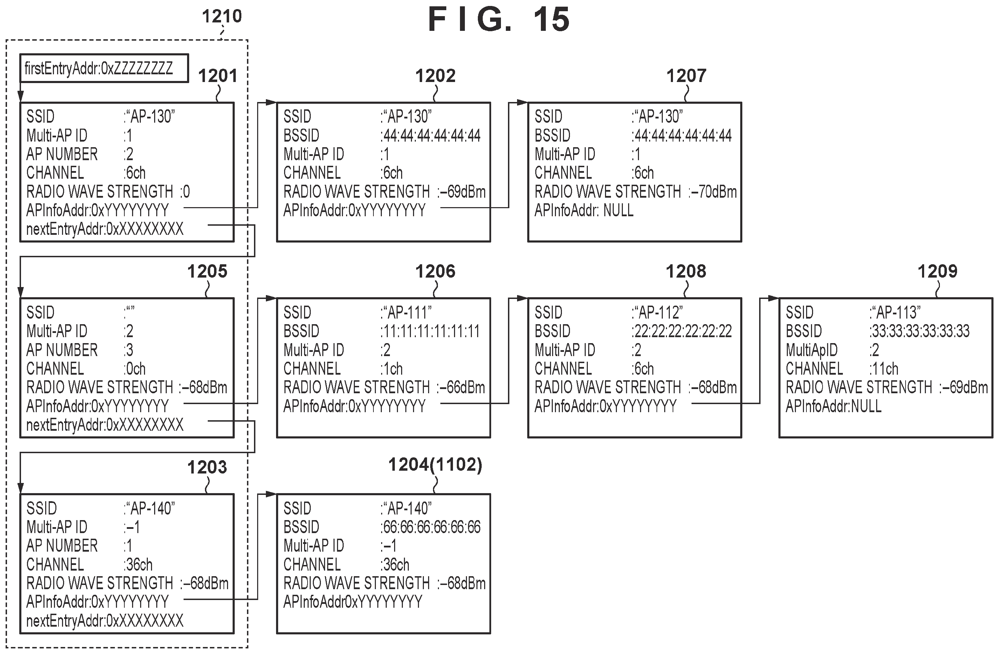

Refer to FIG. 15. FIG. 14 illustrates an example of the configuration of the AP list for display before the sorting. FIG. 15 illustrates an example of the configuration of the AP list for display after the sorting performed through the processing of FIG. 16.

In FIG. 14, the representative entry 1201 is a representative entry corresponding to the multi-AP group 130. The representative entry 1203 is a representative entry corresponding to the AP 141. The representative entry 1205 is a representative entry corresponding to the multi-AP group 110. An AP list 1210 in FIG. 14 is the AP list for display before the sorting, including the representative entries 1201, 1203, and 1205.

As a result of the sorting processing illustrated in FIG. 16, in the present embodiment, the representative entry 1203 of the AP 141 that does not support multi-AP communication is sent to the end of the AP list 1210 for display, as illustrated in FIG. 15. In other words, the representative entries 1201 and 1205 of the APs that support multi-AP communication are sorted to be ranked above the representative entry 1203 of the AP 141 that does not support multi-AP communication in the AP list 1210 for display.

### Display of AP Information Based on AP List for Display

FIG. 17 is a flowchart illustrating an example of the processing performed in step S704 of FIG. 7. The processing in FIG. 17 is implemented, for example, by the CPU 212 reading out a program stored in the ROM 213 into the RAM 214 and executing that program. FIG. 17 illustrates processing for referring to the AP list for display sorted through the processing of step S911 and displaying a list of APs discovered through the AP search. Note that the AP list for display referred to in this flowchart will be described as having a list structure such as that illustrated in FIG. 15. Examples of the display will be described later with reference to FIGS. 18A to 18C and 18E to 18H.

In step S1701, the CPU 212 reads out the representative entries of the AP list for display in order from the top.

In step S1702, the CPU 212 determines whether the representative entry read out in step S1701 is a representative entry of an AP that supports multi-AP communication. If the CPU 212 determines that the representative entry is for an AP that supports multi-AP communication, the sequence moves to step S1703. However, if the CPU 212 determines that the representative entry is not for an AP that supports multi-AP communication, the sequence moves to step S1714. Specifically, if the multi-AP ID of the representative entry read out in step S1701 is "-1", the CPU 212 determines that the representative entry is for an AP that does not support multi-AP communication. However, if the multi-AP ID is not "-1", the CPU 212 determines that the representative entry is for an AP that supports multi-AP communication.

If the representative entry read out is a representative entry for an AP that supports multi-AP communication, the processing branches according to whether the SSID is common among the APs in the multi-AP group.

In step S1703, the CPU 212 determines whether the SSIDs are common within the group of APs that support multi-AP communication. If the CPU 212 determines that the SSIDs are common, the sequence moves to step S1704. However, if the CPU 212 determines that the SSIDs are not common, the sequence moves to step S1709. Specifically, in step S1703, if the SSID of the representative entry is set to NULL, the CPU 212 determines that the SSIDs are not common. However, if the SSID of the representative entry is not set to NULL, the CPU 212 determines that the SSIDs are common.

In step S1704, the CPU 212 displays image information (an icon) indicating that the AP read out from the AP list for display supports multi-AP communication on the console unit 220. The image information (the icon) indicating that multi-AP communication is supported will be described later with reference to FIGS. 18A to 18C.

In step S1705, the CPU 212 displays the SSID common in the multi-AP group, stored in the representative entry, on the console unit 220.

In step S1706, the CPU 212 displays a frame circumscribing the icon displayed in step S1704 and the display region of the SSID displayed in step S1705.

In step S1707, the CPU 212 draws the region within the frame displayed in step S1706 with a predetermined background pattern. In other words, the region within the frame displayed in step S1706 is highlighted. Here, the predetermined background pattern may be any pattern as long as the icon or SSID can be recognized. The predetermined background pattern is a pattern for displaying APs that support multi-AP communication and APs that do not support multi-AP communication so as to be distinguishable from each other. Alternatively, a background color of the region within the displayed frame may be different from other display regions.

In this manner, when displaying the AP search result, APs that support multi-AP communication are displayed with image information (an icon) making them identifiable as such, and furthermore, a display highlighting the difference from the APs that do not support multi-AP communication is implemented.

In step S1708, the CPU 212 determines whether the readout of the representative entry from the AP list for display is complete. If the CPU 212 determines that the readout is complete, the processing in FIG. 17 ends. However, if the CPU 212 determines that the readout is not complete, the sequence moves to step S1702.

From step S1709 on, the CPU 212 displays APs constituting a multi-AP group for which the SSIDs are not common, as a result of the AP search. In this case, the CPU 212 performs the display processing while referring to the individual entries (e.g., the individual entries 1206, 1208, and 1209) linked from the representative entry (e.g., the representative entry 1205) to display the SSIDs in units of Coordinated APs having different SSIDs.

In step S1709, the CPU 212 determines whether a plurality of individual entries are linked to the representative entry. If the CPU 212 determines that the entries are linked in this manner, the sequence moves to step S1710. However, if the CPU 212 determines that the entries are not linked in this manner, the sequence moves to step S1706. Specifically, if the member APInfoAddr of the representative entry is NULL, the CPU 212 determines that the entries are not linked. However, if the member APInfoAddr is not NULL, the CPU 212 determines that the entries are linked.

In step S1710, the CPU 212 reads out the individual entries linked to the representative entry in order.

In step S1711, the CPU 212 displays image information (an icon) on the console unit 220, indicating that multi-AP communication is supported in units of Coordinated APs.

In step S1712, the CPU 212 displays the SSID on the console unit 220.

In step S1713, the CPU 212 updates the address indicated by APInfoAddr with the value of the member in the AP information currently being read out in order to read out the subsequent individual entries. The CPU 212 then returns to step S1709 and repeats the display processing until APInfoAddr is NULL, i.e., until all the AP information of the same multi-AP group is read out.

In step S1714, the CPU 212 displays the SSID of the AP that does not support multi-AP communication, stored in the representative entry, on the console unit 220. When an AP does not support multi-AP communication, the representative entry will be different if the SSID of the AP is different, and thus the member SSID in the representative entry may simply be referred to and displayed on the console unit 220.

Note that the configuration may be such that processing for displaying the frame (rectangle), the background pattern, and the like in steps S1706 and S1707 may be omitted. For example, when the display region in the console unit 220 is small, the display performance, such as the resolution, is low, or the like, the configuration may be such that only the icon is displayed.

FIGS. 18A to 18C are diagrams illustrating examples of image information making it possible to distinguish APs that support multi-AP communication from APs that do not support multi-AP communication. As illustrated in FIGS. 18A to 18C, the image information is an icon.

As illustrated in FIGS. 18A and 18B, the icons are motifs (graphics) indicating that the waveforms of a plurality of radio waves are overlapping. In multi-AP communication, a plurality of APs and a STA that support multi-AP communication are connected and communicate at the same time. Accordingly, displaying a graphic (an icon) in which the waveforms of a plurality of radio waves overlap makes it possible to distinguish an AP that supports multi-AP communication from an AP that does not support multi-AP communication. The image information may also be an icon that combines a single radio waveform and a circular graphic, as illustrated in FIG. 18C. The CPU 212 may display the icon in FIG. 18C in accordance with the display region (display size) of the console unit 220. Note that the technique of the present disclosure can be applied to any image information enabling APs that support multi-AP communication to be distinguished from APs that do not support multi-AP communication, and is not limited to the icons illustrated in FIGS. 18A to 18C.

FIG. 18E illustrates an example of the AP search result screen displayed on the console unit 220 in step S704 when the result of the AP search is configured as the AP list for display illustrated in FIG. 15. The AP search result screen displays the information (SSIDs) of the APs discovered through the AP search in a list. The information of each AP is displayed such that a user selection thereof can be accepted. In the AP search result screen, the APs 131 and 132 belonging to the multi-AP group 130, in which the SSIDs are common within the multi-AP group, are displayed as a single item surrounded by a single rectangular frame. In addition, the SSIDs of the APs 111 to 113 belonging to the multi-AP group 110, where the SSIDs are not common, are also displayed in the AP search result screen. In other words, the SSIDs of the APs 111 to 113 are displayed in a frame displayed as a single item, which is a single option.

In the AP search result screen, the icons illustrated in FIG. 18A are displayed adjacent to the SSIDs of the APs that support multi-AP communication. Accordingly, in the example in FIG. 18E, the user can identify that the group of the AP-130, and the APs 111 to 113 (a single item) supports multi-AP communication. However, the icon illustrated in FIG. 18A is not displayed for the AP-140, and the user can therefore identify that the AP-140 does not support multi-AP communication. In this manner, when displaying the list of APs discovered through the AP search, the CPU 212 displays information pertaining to the APs that support a multi-AP communication method so as to be distinguishable from information pertaining to APs that do not support a multi-AP communication method. This makes it possible to identify APs that support multi-AP communication. In addition, through the processing of steps S1706 to S1707, a rectangular frame and a background pattern are displayed for each multi-AP group in the AP search result screen as image information. In other words, in the processing illustrated in FIG. 17, the CPU 212 performs display control so that a plurality of access points (the APs 111 to 113) are displayed so as to be identifiable as forming a single multi-AP group. For example, as the image information, the CPU 212 may set the display color of the SSIDs of the APs that support multi-AP communication to a different display color from the SSIDs of the APs that do not support multi-AP communication.

Furthermore, in the present embodiment, through the processing for sorting the AP list for display (see FIG. 16), the representative entries of the APs that support multi-AP communication are sorted so as to be linked before the representative entries of the APs that do not support multi-AP communication. Through such sorting processing, the CPU 212 performs display control such that the SSIDs of APs that support multi-AP communication are displayed higher in the AP search result display screen than the SSIDs of APs that do not support multi-AP communication. Accordingly, an AP that supports multi-AP communication can be easily selected even in environments where a plurality of wireless networks are present.

### Detailed Display When Selecting Access Point

FIG. 19 is a flowchart illustrating an example of the processing performed in step S707 of FIG. 7. FIG. 19 illustrates processing for displaying detailed information pertaining to the AP to be selected when the user selects a desired AP from the AP search result screen (FIG. 18E). The processing in FIG. 19 is implemented, for example, by the CPU 212 reading out a program stored in the ROM 213 into the RAM 214 and executing that program.

Note that in the flowchart in FIG. 19, it is assumed that the AP list for display referred to by the CPU 212 is referred to for the members constituting the list structure in the RAM 214, illustrated in FIG. 15.

In step S1901, the CPU 212 reads out a representative entry of the AP selected by the user in the AP search result screen from the AP list for display.

In step S1902, the CPU 212 determines whether the representative entry read out is a representative entry of an AP that supports multi-AP communication. If the CPU 212 determines that the representative entry is for an AP that supports multi-AP communication, the sequence moves to step S1903. However, if the CPU 212 determines that the representative entry is not for an AP that supports multi-AP communication, the sequence moves to step S1912. Specifically, if the member multi-AP ID of the representative entry is "-1", the CPU 212 determines that the representative entry is for an AP that does not support multi-AP communication. However, if the member multi-AP ID of the representative entry is not "-1", the CPU 212 determines that the representative entry is for an AP that supports multi-AP communication.

In step S1903, the CPU 212 reads out the members "Multi-AP ID" and "AP number" in the representative entry, and displays the detailed information of the AP on the first line.

Thereafter, the content displayed on the second and subsequent lines of the detailed information of the AP differs according to whether the SSID is common among the APs in the group.

In step S1904, the CPU 212 determines whether the SSIDs are common within the group of APs that support multi-AP communication. If the CPU 212 determines that the SSIDs are common, the sequence moves to step S1905. However, if the CPU 212 determines that the SSIDs are not common, the sequence moves to step S1909. Specifically, in step S1904, if the SSID of the representative entry is not NULL, the SSIDs are determined to be common. However, if the SSID of the representative entry is NULL, the SSIDs are determined not to be common.

In step S1905, the CPU 212 reads out the member "SSID" in the representative entry, and displays the SSID common in the multi-AP group on the second line of the detailed information for the AP. Furthermore, in the third and subsequent lines of the AP detailed information, the CPU 212 displays the information pertaining to the Coordinated APs belonging to the multi-AP group in accordance with the "AP number".

In step S1906, the CPU 212 determines whether an individual entry is registered in the representative entry. If the CPU 212 determines that an individual entry is registered, the sequence moves to step S1907. However, if an individual entry is determined not to be registered, the processing of FIG. 19 ends. Specifically, if the member APInfoAddr in the representative entry is NULL, the CPU 212 determines that an individual entry is not registered. However, if the member APInfoAddr in the representative entry is not NULL, the CPU 212 determines that an individual entry is registered.

In step S1907, the CPU 212 refers to the individual entry pointed to by APInfoAddr. Then, for each Coordinated AP, the CPU 212 obtains the BSSID and information pertaining to the radio wave strength from the individual entry, and displays the obtained information on the console unit 220. The CPU 212 also displays image information (an icon) on the console unit 220, indicating that multi-AP communication is supported.

In step S1908, the CPU 212 updates APInfoAddr of the representative entry with the value of APInfoAddr of the individual entry currently being read out in order to read out the subsequent AP information. If the last individual entry is being read out, APInfoAddr of the representative entry is updated to NULL, which is APInfoAddr for the last individual entry.

On the other hand, for groups in which the SSIDs are different within the multi-AP group, the CPU 212 displays the detailed information in units of Coordinated APs in the processing of steps S1909 to S1911. The SSID is different for each AP in the multi-AP group, and thus the SSID being displayed for each AP differs from the processing of steps S1905 to S1908. The CPU 212 also displays image information (an icon) indicating that multi-AP communication is supported for each Coordinated AP that belongs to the multi-AP group.

In step S1909, the CPU 212 determines whether an individual entry is registered in the representative entry. If the CPU 212 determines that an individual entry is registered, the sequence moves to step S1910. However, if an individual entry is determined not to be registered, the processing of FIG. 19 ends. Specifically, the CPU 212 makes this determination based on whether the member APInfoAddr in the representative entry is NULL.

In step S1910, the CPU 212 refers to the individual entry pointed to by APInfoAddr. Then, for each Coordinated AP, the CPU 212 obtains the BSSID and information pertaining to the radio wave strength from the individual entry, and displays the obtained information on the console unit 220. The CPU 212 also displays image information (an icon) on the console unit 220, indicating that multi-AP communication is supported.

In step S1911, the CPU 212 updates APInfoAddr of the representative entry with the value of APInfoAddr of the individual entry currently being read out in order to read out the subsequent AP information. If the last individual entry is being read out, APInfoAddr of the representative entry is updated to NULL, which is APInfoAddr for the last individual entry.

The processing of steps S1912 to S1914 is processing for displaying detailed information of an AP when the representative entry read out does not support multi-AP communication. If the representative entry read out does not support multi-AP communication, information pertaining to the multi-AP group (an identifier of the group, the number of APs included in the group) and image information indicating that multi-AP communication is supported are not displayed as detailed information of the AP.

In step S1912, the CPU 212 determines whether an individual entry is registered in the representative entry. If the CPU 212 determines that an individual entry is registered, the sequence moves to step S1913. However, if an individual entry is determined not to be registered, the processing of FIG. 19 ends. Specifically, the CPU 212 makes this determination based on whether the member APInfoAddr in the representative entry is NULL.

In step S1913, the CPU 212 refers to the individual entry pointed to by APInfoAddr. Then, for each Coordinated AP, the CPU 212 obtains the BSSID and information pertaining to the radio wave strength from the individual entry, and displays the obtained information on the console unit 220.

In step S1914, the CPU 212 updates APInfoAddr of the representative entry with the value of APInfoAddr of the individual entry currently being read out in order to read out the subsequent AP information. If the last individual entry is being read out, APInfoAddr of the representative entry is updated to NULL, which is APInfoAddr for the last individual entry.

FIGS. 20A and 20B illustrate examples of the details screen displayed in step S707 when an AP that supports multi-AP communication is selected by the user in the AP search result screen illustrated in FIG. 18E. FIG. 20A illustrates an example of the details screen when the AP 130 in FIG. 18E has been selected. FIG. 20B illustrates an example of the details screen when one of the AP111, AP112, and AP113 in FIG. 18E is selected. Meanwhile, FIG. 20B illustrates display content 2002 for the entire multi-AP group displayed by scrolling the details screen when the detailed information of the AP cannot fit on a single screen. As illustrated in FIGS. 20A and 20B, information such as the number of APs included in the multi-AP group, the SSID, BSSID, radio wave strength, and the like of the AP, and the like is displayed in the details screen as the detailed information of the AP selected by the user.

Although the present embodiment describes an example in which the identifier of the multi-AP group, the number of APs belonging to the group, the SSID, the BSSID for each Coordinated AP, and the radio wave strength are displayed in the details screen as the detailed information of the AP, the configuration is not limited thereto. For example, information such as security settings supported by the AP may be further displayed in the details screen. Additionally, the items of detailed information of the AP may be reduced, the detailed information of the AP may be displayed using graphics, or the like in accordance with the size of the display region.

As illustrated in FIG. 20A, when the SSID is common within the multi-AP group, a connect button 2001 is displayed in the details screen. The connect button 2001 is a button capable of accepting a selection for connecting to all the Coordinated APs in the multi-AP group found in the AP search through multi-AP communication. When a selection to connect to all the APs in the multi-AP group is accepted through the connect button 2001, the CPU 212 executes processing for connecting to all the APs in the multi-AP group. The processing for connecting to the APs is executed through the processing of steps S606 and on in FIG. 6. Then, if the connection to all the APs in the multi-AP group is successful, the CPU 212 displays a screen indicating that the connection is complete on the console unit 220.

In addition, as illustrated in FIG. 20B, when the SSIDs in the multi-AP group are not common, a button 2003 capable of accepting a selection for connecting to all the APs in the multi-AP groups found through the AP search and a button 2004 capable of accepting a selection for connecting to any AP selected by the user are displayed in the details screen. If the user selects the button 2004, the CPU 212 establishes a wireless connection with the AP selected by the user, among the AP detailed information being displayed, without using multi-AP communication. In other words, the details screen illustrated in FIG. 20B can also be said to be a screen capable of accepting a user selection for connecting to a plurality of APs included in the multi-AP group using a multi-AP communication method, or a selection for connecting to an individual AP included in the multi-AP group without using a multi-AP communication method. The processing for connecting to the APs is executed through the processing of steps S606 and on in FIG. 6. If the "connect individually" button 2004 is selected, the CPU 212 connects to the single AP by requesting a connection without adding a multi-AP IE to the Association Request frame transmitted to the AP in step S606 of FIG. 6. Upon a successful connection to the multi-AP group or the individual AP, the CPU 212 displays a screen indicating that the connection is complete (FIG. 20C) on the console unit 220. Note that FIG. 20B illustrates that the AP is selected by using hatching to indicate the display item (AP-111) corresponding to the AP 111 in the multi-AP group (identifier: 2).

According to the present embodiment, when displaying a list of APs discovered through an AP search, APs that support multi-AP communication are displayed so as to be distinguishable from APs that do not support multi-AP communication. Such a format enables the user to recognize whether the AP supports multi-AP communication when performing multi-AP communication. This makes it possible to improve the usability when performing multi-AP communication.

In addition, according to the present embodiment, when displaying a list of APs discovered through an AP search, a plurality of APs having different SSIDs within the multi-AP group are displayed together, adjacent to each other. This display format also makes it possible to improve the usability when performing multi-AP communication.

Furthermore, according to the present embodiment, when APs discovered through an AP search are displayed in a list on the screen of the console unit 220, APs that support multi-AP communication are displayed higher than APs that do not support multi-AP communication. This display format also makes it possible to improve the usability when performing multi-AP communication.

### Second Embodiment

A second embodiment will be described hereinafter, focusing on differences from the first embodiment. The first embodiment described an example in which APs that support multi-AP communication are displayed higher in the display list than APs that do not support multi-AP communication, but the order in which the AP search results are displayed is not limited thereto. For example, the APs may be displayed in order from the AP having the highest radio wave strength, in consideration of multi-AP communication. Displaying the AP search results in order from the AP having the highest radio wave strength makes it possible to suppress mistaken connections to APs that support multi-AP communication when the radio wave strengths of the APs that support multi-AP communication are low. This enables the usability of an MFP capable of communicating with APs that support multi-AP communication to be improved.

Processing performed by the MFP 100 according to the present embodiment when displaying AP search results in order from the highest radio wave strength obtained from the APs as a result of an AP search will be described hereinafter.

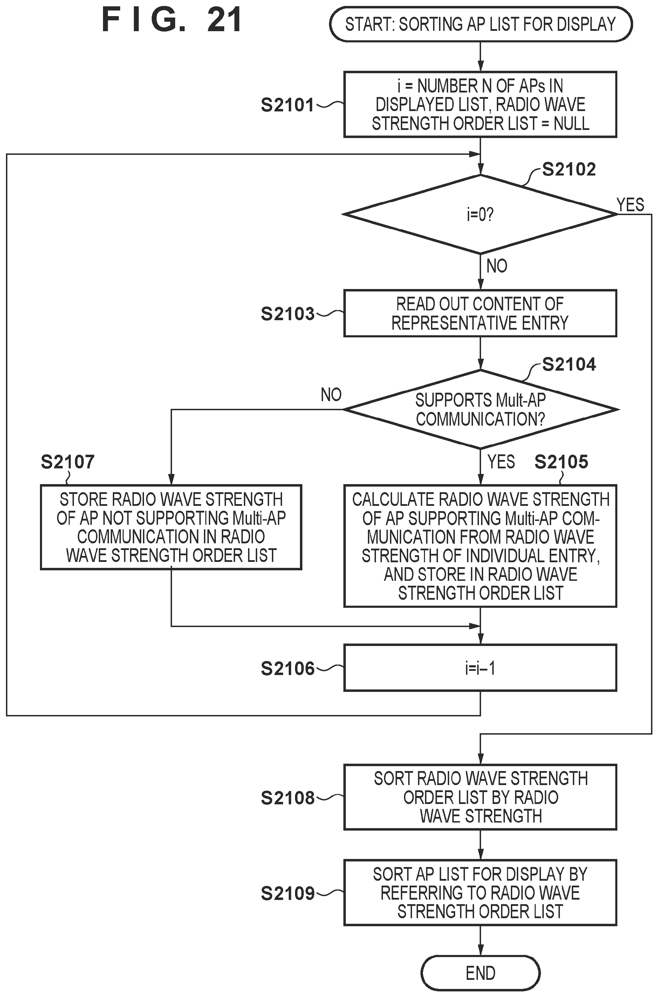

FIG. 21 is a flowchart illustrating processing for sorting an AP list for display according to the present embodiment. The processing of FIG. 21 corresponds to step S911 in FIG. 9. The processing in FIG. 21 is implemented, for example, by the CPU 212 reading out a program stored in the ROM 213 into the RAM 214 and executing that program.

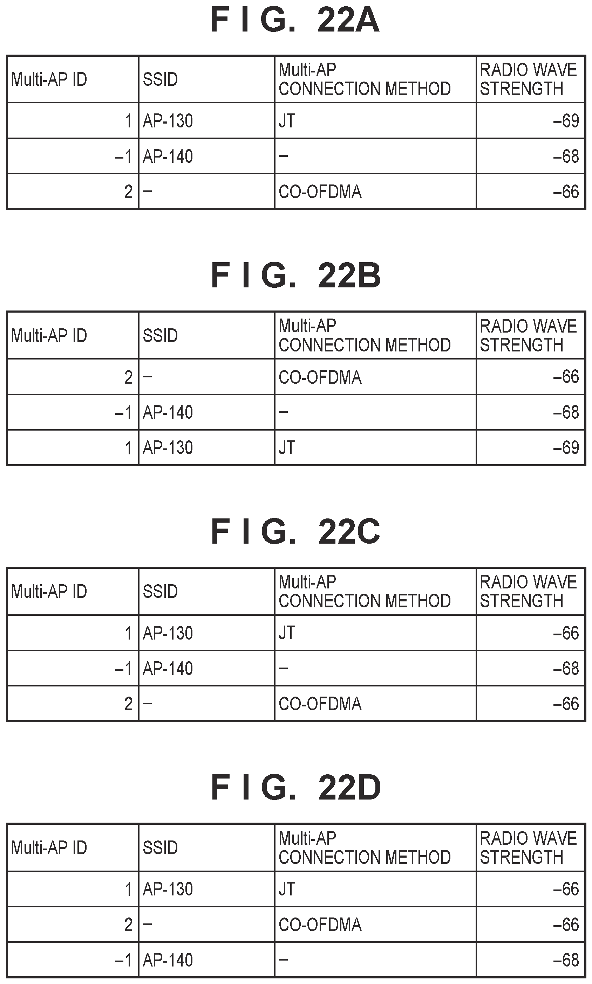

In the present embodiment, the CPU 212 refers to the pre-sorting AP list for display (FIG. 14), generates a radio wave strength order list, and sorts the AP list for display based on the magnitudes of the radio wave strengths. The radio wave strength order list will be described later with reference to FIGS. 22A and 22B.

In step S2101, the CPU 212 initializes variables temporarily used to sort the AP list for display. Note that variables used in the same processing are also secured in memory allocated to a predetermined region within the RAM 214. In step S2101, the CPU 212 sets a variable i to the number N of representative entries, assigns a table for generating the radio wave strength order list, such as that illustrated in FIG. 22A, from the RAM 214, and initializes all the items to 0. In the present embodiment, the number of representative entries N = 3, and a region is secured such that information pertaining to the three representative entries in the radio wave strength order list can be stored, for example.

In step S2102, the CPU 212 determines whether the variable i is 0. If the CPU 212 determines that the variable i is 0 (the processing has ended for all representative entries), the sequence moves to step S2108. However, if the CPU 212 determines that the variable i is not 0, the sequence moves to step S2103.

In the processing of steps S2103 to S2107 that follows thereafter, the CPU 212 sequentially refers to the AP list for display by the number N of representative entries, determines the radio wave strength on a representative entry basis, and stores each radio wave strength in the radio wave strength order list. For an AP that supports multi-AP communication, one radio wave strength is stored in the radio wave strength order list for a single multi-AP group.

In step S2103, the CPU 212 reads out the content of the representative entry.

In step S2104, the CPU 212 determines whether the representative entry read out in step S2103 is a representative entry of an AP that supports multi-AP communication. If the CPU 212 determines that the representative entry is for an AP that supports multi-AP communication, the sequence moves to step S2105. However, if the CPU 212 determines that the representative entry is not for an AP that supports multi-AP communication, the sequence moves to step S2107. Specifically, if the member multi-AP ID of the representative entry is "-1", the CPU 212 determines that the representative entry is not for an AP that supports multi-AP communication. However, if the member multi-AP ID of the representative entry is not "-1", the CPU 212 determines that the representative entry is for an AP that supports multi-AP communication.

In step S2105, the CPU 212 calculates the radio wave strength as a multi-AP group with reference to the radio wave strength of each Coordinated AP stored in an individual entry, and stores the radio wave strengths in the radio wave strength order list.

As an example of a first method for calculating the radio wave strength for an AP that supports multi-AP communication, in the present embodiment, the value of the AP having the highest radio wave strength among the Coordinated APs belonging to the group is taken as the radio wave strength of the multi-AP group. For example, as illustrated in FIG. 14, for the multi-AP group 130, the radio wave strength (-69 dBm) of the AP 131 (the individual entry 1202) is the highest within the group. Accordingly, the radio wave strength of the AP 131 is taken and stored at the beginning of the radio wave strength order list.

In step S2106, the CPU 212 subtracts 1 from the value of the variable i representing the remaining number of representative entries, and returns to step S2102. Likewise, for the multi-AP group 110, when the variable i = 1, the radio wave strength (- 66 [dBm]) of the AP 111 (an individual entry 1206) is the highest within the group, and that value is therefore taken and stored in the third place in the radio wave strength order list.

In step S2107, the CPU 212 refers to the radio wave strength of an AP that does not support multi-AP communication and stores the radio wave strength in the radio wave strength order list. In the present embodiment, the value of the AP having the highest radio wave strength is obtained from one or more individual entries linked to the representative entry, taking into account a case where a plurality of APs having the same SSID are present. In the example illustrated in FIG. 14, the AP that does not support multi-AP communication is a single AP 141 (SSID: "AP-140"), and thus the radio wave strength (-68 [dBm]) stored in the individual entry 1204 is used.

FIG. 22A illustrates an example of the radio wave strength order list after the processing of steps S2102 to S2107 has been executed. The result here indicates that for the APs that support multi-AP communication, the value of the AP having the highest radio wave strength within the multi-AP group is used. The radio wave strength order list in the present embodiment includes the multi-AP ID ("-1", if multi-AP communication is not supported) for identifying the multi-AP group, the SSID (NULL, if not common within the multi-AP group), the multi-AP connection method, and the radio wave strength, but other information may be included as well.

In step S2108, the CPU 212 sorts the radio wave strength order list in order from the highest AP radio wave strength. In step S2108, the CPU 212 compares the radio wave strengths of the APs in the radio wave strength order list, and sorts the radio wave strengths by moving the radio wave strengths to a different radio wave strength order list in order from the AP having the highest radio wave strength. FIG. 22B illustrates an example in which the radio wave strength order list illustrated in FIG. 22A is sorted in order from the highest radio wave strength.

In step S2109, the CPU 212 refers to the radio wave strength order list sorted in order from the highest AP radio wave strength, discovers an entry in the AP list for display (FIG. 14) that matches the multi-AP ID or SSID, and sorts the AP list for display.

In the present embodiment, when APs detected through an AP search are displayed in a list on the console unit 220, for a multi-AP group, the display order of the APs is sorted according to the radio wave strength of the AP having the highest radio wave strength within the group. This enables the usability of an MFP capable of communicating with APs that support multi-AP communication to be improved.

### Third Embodiment

### Other Radio Wave Strength Calculation Method

A third embodiment will be described hereinafter, focusing on differences from the second embodiment. The method for calculating the radio wave strength for an AP that supports multi-AP communication is not limited to the first calculation method described above. The present embodiment will describe a method for calculating radio wave strength different from the first calculation method. The present embodiment will describe a second calculation method in which the radio wave strength of the AP having the highest radio wave strength within the group is calculated and corrected based on the number of Coordinated APs belonging to the same multi-AP group. If the multi-AP communication method is Joint-TX, a plurality of APs that operate jointly transmit radio waves. An improvement in the radio wave strength as compared to the case of a single AP can therefore be expected. Accordingly, in the present embodiment, the radio wave strength obtained from the AP having the highest radio wave strength within the multi-AP group is multiplied by the number of APs belonging to the same group, and the resulting corrected value is taken as the radio wave strength of the multi-AP group. In other words, the method for determining the radio wave strength in step S2105 of FIG. 21 may be replaced with the second calculation method described hereinafter.

Here, a radio wave strength x expressed in units of dBm, which is a logarithmic expression, is converted to a value P of a radio wave strength in units of mW based on the following calculation formula (Formula 1), and then corrected by multiplication with a number n of access points belonging to the multi-AP group. $Radio wave strength P = {10}^{∧} \left(x\left[dBm\right]/10\right) \left[mW\right]$

Specifically, in the example illustrated in FIG. 22A, in the case of the multi-AP group 130 using Joint-TX, the value of the AP 131 having the highest radio wave strength is -69 [dBm]. Accordingly, the radio wave strength P of the AP 131 is calculated as follows. $Radio wave strength P = {10}^{∧} \left(-69/10\right) = 0.000000126 \left[mW\right]$

Because n = 2, the radio wave strength for the multi-AP group after the correction is calculated as: $10 ∗ LOG \left(0.000000126∗2\right) = - 66 \left[dBm\right]$

FIG. 22C illustrates an example of the radio wave strength order list after the stated correction processing has been executed. Here, for the multi-AP group using Joint-TX, the result is that the radio wave strength of the AP having the highest radio wave strength within the multi-AP group is corrected to a value proportional to the number of APs belonging to the group. If the multi-AP communication method is Co-OFDMA, it is assumed that the value of the AP having the highest radio wave strength within the group is used, as in the second embodiment.

FIG. 22D illustrates an example in which the radio wave strength order list illustrated in FIG. 22C is sorted in order from the highest radio wave strength, but the processing performed here is the same as that of the second embodiment, and will therefore not be described.

Although the present embodiment describes a method for correcting the radio wave strength of the AP having the highest radio wave strength within a multi-AP group, it should be noted that the radio wave strength may be corrected according to the number of APs within the multi-AP group based on the average of the radio wave strengths of the APs within the multi-AP group.

In the present embodiment, when APs detected through an AP search are displayed in a list on the console unit 220, the display order of the APs is sorted with a look to improving the radio wave strength in the multi-AP communication. This enables the usability of an MFP capable of communicating with APs that support multi-AP communication to be improved.

### Fourth Embodiment

A fourth embodiment will be described hereinafter, focusing on differences from the first embodiment. In the first embodiment, when the SSIDs of the plurality of APs included in a single multi-AP group are different, the APs belonging to the multi-AP group are displayed together, adjacent to each other, in the AP search result, but these APs may further be displayed as a single option. Such a format enables the usability of an MFP capable of communicating with APs that support multi-AP communication to be improved.

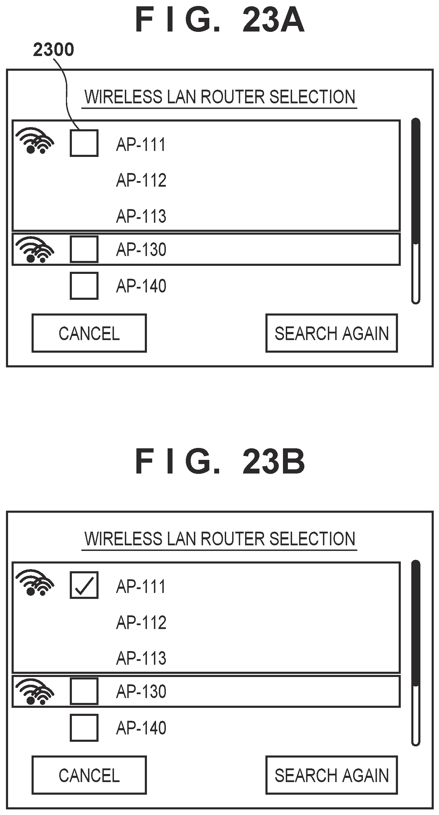

FIGS. 23A and 23B illustrate an example of the AP search result screen displayed on the console unit 220 in step S704 in the present embodiment when the result of the AP search is configured as the AP list for display illustrated in FIG. 15.

In the present embodiment, an icon indicating that the APs discovered through the AP search support multi-AP communication is displayed for one multi-AP group. Additionally, in the present embodiment, the AP search result screen displays checkboxes capable of accepting selections on a multi-AP group basis.

As illustrated in FIG. 23A, the AP search result screen displays a plurality of Coordinated APs together for the multi-AP group 110, in which the SSIDs are not common within the group. In addition, an icon indicating that the multi-AP group 110 supports multi-AP communication, and a checkbox 2300 capable of accepting the selection of the multi-AP group 110, are displayed in the AP search result screen. In other words, in the present embodiment, the CPU 212 performs display control such that information pertaining to the plurality of APs 111 to 113 can be displayed as a single option (the checkbox 2300) when displaying the AP search result screen. In FIG. 23A, the AP-130 is provided with an icon indicating multi-AP support, whereas the AP-140 is not provided with an icon indicating multi-AP support. As such, the user can identify that the AP-130 supports multi-AP communication and the AP-140 does not support multi-AP communication. FIG. 23B illustrates a state in which the multi-AP group 110 is selected as a result of the user operating the checkbox 2300.

In the present embodiment, in the flowchart illustrated in FIG. 17, the CPU 212 executes processing as follows. The CPU 212 skips the processing of step S1711. In step S1707, the CPU 212 displays at the first display position within the multi-AP group an icon which indicates that multi-AP communication is supported, as well as a checkbox.

Through this processing, APs with different SSIDs within the multi-AP group discovered through AP search are displayed as a single option when displaying the AP search result screen, which makes it possible to improve the usability when performing multi-AP communication.

### Fifth Embodiment

### Other Display Examples of AP Search Results

In the first embodiment, when displaying the list of APs in the AP search result screen, the display region was segmented by a frame for each multi-AP group basis in addition to displaying icons, as a method for displaying the APs that support multi-AP communication in an identifiable manner. The present embodiment will describe a method for displaying APs that support other types of multi-AP communication in an identifiable manner.

FIGS. 18F to 18H are diagrams illustrating examples of a display of an AP search result screen according to the present embodiment.

FIG. 18F illustrates an example in which text information indicating that the AP supports multi-AP communication is displayed in the AP search result screen. The text information includes an identifier (the multi-AP ID) of the multi-AP group to which the AP that supports the multi-AP communication belongs. To perform this display, the CPU 212 further performs processing for displaying "multi-AP ID" in steps S1705 and S1712 of the flowchart illustrated in FIG. 17. Although FIG. 18F illustrates an example in which a circumscribing frame and a background pattern are not displayed, these items may be displayed in the same manner as in the first embodiment.

Displaying an identifier of the multi-AP group in addition to an icon indicating that multi-AP communication is supported and the SSID as illustrated in the first embodiment enables the user to more easily identify the multi-AP group.

Although FIG. 18F illustrates an example in which the identifier of the multi-AP group is displayed in the AP search result screen as text information that enables the group to be identified as supporting multi-AP communication, the display is not limited thereto. FIG. 18G illustrates an example in which the number of APs included in the multi-AP group is displayed in the AP search result screen as text information that enables the group to be identified as supporting multi-AP communication. To perform this display, the CPU 212 further performs processing for displaying "AP number" in steps S1705 and S1712 of the flowchart illustrated in FIG. 17. Furthermore, the CPU 212 may sort the AP list for display in order from the highest number of APs included in the multi-AP group, and display the group with the highest number of APs at the top, as illustrated in the figure.

FIG. 18H illustrates an example in which a modifying image that modifies the text indicating the SSID of the multi-AP group is displayed in the AP search result screen. The modifying image is underlining in the example illustrated in FIG. 18H. In this manner, modifying the SSIDs of APs that support multi-AP communication with underlining makes it possible to distinguish APs that support multi-AP communication from APs that do not support multi-AP communication. To perform this display, the CPU 212 performs processing for displaying the SSID in the AP search result screen and further displaying an underline under the displayed SSID in steps S1705 and S1712 of the flowchart illustrated in FIG. 17.

In this manner, even when displaying an AP search result screen such as that illustrated in FIGS. 18F to 18H, when displaying a list of APs detected through AP search, APs that support multi-AP communication can be displayed so as to be distinguishable from APs that do not support multi-AP communication.

### Sixth Embodiment

Although the first to fifth embodiments described examples in which the results of an AP search are displayed on the console unit 220 of the MFP 100, the technique of the present disclosure can also be applied when displaying the results of the AP search on the mobile terminal device 101 using network setup mode.

### Network Setup Mode Processing

The MFP 100 according to the present embodiment can operate in network setup mode, which is a mode for executing network setup for the MFP 100, by accepting a predetermined operation from the user. When operating in network setup mode, the MFP 100 operates as a setup access point, which is enabled while operating in network setup mode, by using the communication control unit 240. The setup access point is a different access point from the access points enabled in AP mode described above. The SSID of the setup access point is assumed to include a predetermined character string that can be recognized by a settings app of the mobile terminal device 101. It is also assumed that the setup access point is an access point that does not require a password for connection. Additionally, the MFP 100 operating in network setup mode is assumed to use a predetermined communication protocol (a setup communication protocol) in the communication with the mobile terminal device 101 connected to the setup access point. Specifically, the setup communication protocol is Simple Network Management Protocol (SNMP), for example. Hypertext Transfer Protocol (HTTP), Device Provisioning Protocol (DPP), and the like can also be given as other specific examples of the setup communication protocol. Once a predetermined amount of time has passed after the MFP 100 starts operating in network setup mode, the MFP 100 stops operating in network setup mode and disables the setup access point. This is because the setup access point is an access point that does not require a password as described above, and thus if the setup AP is enabled for a long time, it is more likely that a connection will be requested from an inappropriate device. Note, however, that the setup access point may be an access point that requires a password. In this case, it is assumed that the password used to connect to the setup access point is a fixed password (which cannot be changed by the user) with which the settings app is provided in advance.

The following will describe an example in which the AP search result screen is displayed on the display unit 420 provided in the mobile terminal device 101 when the mobile terminal device 101 makes wireless LAN settings for the MFP 100 using network setup mode.

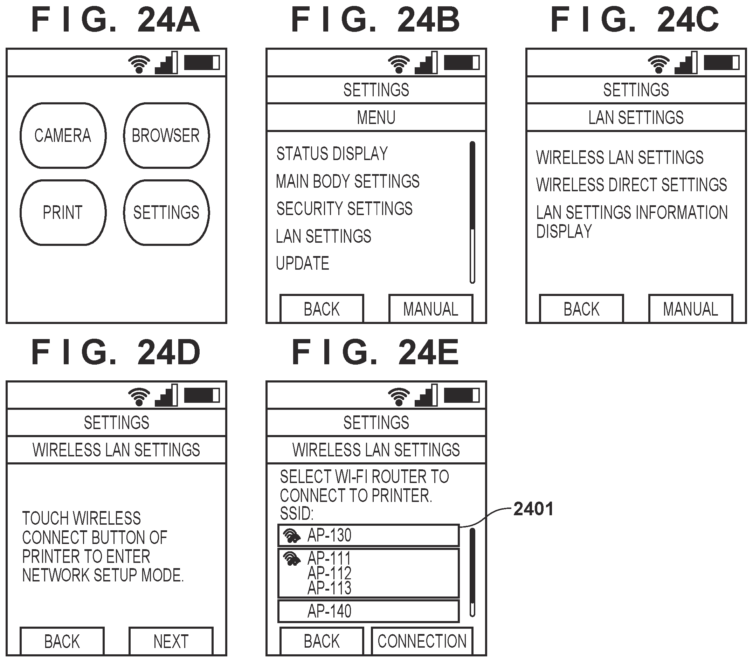

FIGS. 24A to 24D schematically illustrate examples of screens displayed on a display (a touchscreen) included in the display unit 420 of the mobile terminal device 101. FIG. 24A illustrates an example of a home screen displayed while the mobile terminal device 101 is turned on (an idle state). In FIG. 24A, display items corresponding to a camera, a browser, printing, and settings are displayed. The "Settings" display item is an item related to changing the settings of the mobile terminal device 101. When the user selects one of the display items in the home screen, the mobile terminal device 101 executes the corresponding setting, function, or the like.

FIG. 24B is an example of a settings screen displayed when "Settings" is selected in the screen illustrated in FIG. 24A, and a menu for making settings related to various operations of the MFP 100, including LAN settings, is displayed.

FIG. 24C is an example of the display of a menu screen for LAN settings, displayed when "LAN Settings" is selected in the settings screen illustrated in FIG. 24B. "Wireless LAN Settings", "Wireless Direct Settings", and "LAN Settings Information Display" are displayed as menu items in the LAN settings menu screen illustrated in the present embodiment. Note that the configuration may be such that settings related to wired LAN are included in the LAN settings menu screen.

FIG. 24D is an example of the display of the screen displayed when "Wireless LAN Settings" is selected in the LAN settings screen illustrated in FIG. 24C. The screen in FIG. 24D displays a message pertaining to an operation method for changing the MFP 100 to network setup mode.

When the user touches the icon 322 displayed on the console unit 220 of the MFP 100 in response to the message illustrated in FIG. 24D, the MFP 100 starts operating in network setup mode. Then, upon discovering the SSID of the setup access point, the mobile terminal device 101 connects to the MFP 100 in network setup mode using wireless settings that do not require a password. At this time, upon discovering the SSID of the setup access point, the mobile terminal device 101 may transition from the screen illustrated in FIG. 24D without waiting for the user to perform an operation on the screen, or may wait for the user to touch a "Next" button before transitioning. Furthermore, the mobile terminal device 101 may be configured to, when a plurality of SSIDs of setup access points are discovered, display a screen (not shown) for selecting the MFP 100 for setup and enable the user to select that MFP 100.

The mobile terminal device 101 connected to the MFP 100 in network setup mode accesses the MFP 100 using the SNMP protocol, instructs an access point search to be performed, and obtains the AP information discovered by the MFP 100 as MIB information.

Then, based on the AP information obtained from the MFP 100 through the MIB information, the mobile terminal device 101 displays the APs that support multi-AP communication so as to be distinguishable from the APs that do not support multi-AP communication.

FIG. 24E illustrates an example of the AP search result screen displayed by the mobile terminal device 101 on the display unit 420 when the result of the AP search is configured as the AP list for display illustrated in FIG. 15, in the same manner as in the first embodiment. A display part 2401 illustrated in FIG. 24E displays a list of APs. The display part 2401 displays icons for identifying APs that support multi-AP communication, similar to FIG. 18E. The display part 2401 displays the APs that support multi-AP communication with priority at the top of the list.

The display method and the display order in the MFP 100 described in the second to fourth embodiments can also be applied when the mobile terminal device 101 displays the results of the AP search.

Note that in the processing described above, the AP search (corresponding to step S701 in FIG. 7) is executed by the MFP 100, and the processing related to determining the display order after step S703 and displaying the results of the AP search (corresponding to step S704) is executed by the mobile terminal device 101. Specifically, when the CPU 212 receives an AP search request through predetermined MIB information, the CPU 212 performs the AP search processing in the same manner as in the flowchart illustrated in FIG. 8. The CPU 212 then responds to a predetermined MIB request from the mobile terminal device 101 with AP information corresponding to the AP list in FIG. 11C. Then, the mobile terminal device 101 sorts the AP information, displays the AP list, and displays the detailed information of the AP in the same manner as the processing illustrated in FIGS. 9, 16, 17, 19, and 21. The detailed information of the AP is displayed on the display unit 420 when the user presses a "Connect" key on the screen illustrated in FIG. 24E. The mobile terminal device 101 displays the detailed information of the AP on the display unit 420, which is the same as the display example illustrated in FIG. 20A or FIG. 20B.

Through the foregoing processing, a plurality of methods for displaying APs that support multi-AP communication in a distinguishable manner can be provided in a system that performs network setup of a communication apparatus (the MFP 100) from an external communication apparatus (the mobile terminal device 101). This makes it possible to improve the usability for performing multi-AP communication.

The above-described various types of control performed by the CPUs of the respective devices may be performed by a single piece of hardware, or the control of the apparatus as a whole may be performed by dividing the processing up among multiple pieces of hardware (e.g., multiple processors or circuits).

Although the foregoing has described techniques of the present disclosure in detail based on preferred embodiments thereof, the techniques of present disclosure are not intended to be limited to the specific embodiments, and all variations that do not depart from the spirit of the techniques of present disclosure are intended to be included in the scope of the present disclosure. Furthermore, the above-described embodiments are merely embodiments of the techniques of the present disclosure, and different embodiments can be combined as appropriate.

Although the foregoing embodiments describe cases where the techniques of present disclosure are applied to an MFP as examples, the present disclosure is not limited to these examples, and can be applied in any wireless device capable of multi-AP communication. In other words, the techniques of the present disclosure can be applied in personal computers, PDAs, tablet terminals, mobile telephone terminals such as smartphones, music players, game consoles, e-book readers, smart watches, various measurement devices (sensor devices) such as thermometers and hygrometers, and the like. The techniques of the present disclosure can also be applied in digital cameras (including still cameras, video cameras, network cameras, and security cameras), printers, scanners, and drones. The techniques of the present disclosure can also be applied in video output devices, audio output devices (e.g., smart speakers), streaming media players, wireless LAN client devices (adapters) to which USB terminals, LAN cable terminals, or the like can be connected, and the like. Video output devices include, for example, a device such as a set-top box, which obtains (downloads) a moving image or still image on the Internet, specified by a URL provided by a communication apparatus, and outputs the moving image or still image to a display device connected through a video output terminal such as an HDMI (registered trademark) terminal. Through this, streaming playback, a mirrored display (a display in which content displayed in a communication apparatus is also displayed on a display device), or the like is implemented in a display device. The video output device also includes a media player such as a television, a hard disk recorder, a Blu-ray recorder, a DVD recorder, or the like, as well as a head-mounted display, a projector, a display device (monitor), a signage device, or the like. The techniques of the present disclosure can also be applied in a device capable of connecting through Wi-Fi, or what is known as a "smart home appliance", such as an air conditioner, a refrigerator, a washing machine, a vacuum cleaner, an oven, a microwave oven, a lighting fixture, a heating appliance, a cooling appliance, or the like.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A communication apparatus (100) that connects to an access point through wireless communication, the communication apparatus (100) comprising:
a connection means configured to connect to a plurality of access points that operate jointly, through a predetermined communication method;
a search means configured to search for an external access point outside the communication apparatus (100) and obtain information pertaining to the external access point discovered by the search; and
a display control means configured to, in a case where the external access point discovered by the search means includes a plurality of access points that support the predetermined communication method and the plurality of access points form a group, control information pertaining to the plurality of access points included in the group to be displayed so as to be selectable as a single option when information pertaining to external access points discovered by the search means is displayed.

2. The communication apparatus (100) according to claim 1, further comprising:
a receiving means configured to receive, based on the single option being selected, one of a selection for connecting to the plurality of access points included in the group using the predetermined communication method and a selection for connecting to an individual access point included in the group without using the predetermined communication method.

3. The communication apparatus (100) according to claim 1 or 2,
wherein in a case where the external access point discovered by the search means includes an access point that supports the predetermined communication method, the display control means further controls information pertaining to the access point that supports the predetermined communication method to be displayed so as to be distinguishable from information pertaining to an access point that does not support the predetermined communication method when the information pertaining to the external access point discovered by the search means is displayed.

4. The communication apparatus (100) according to any one of claims 1 to 3,
wherein in a case where the external access point discovered by the search means includes a plurality of access points, the display control means controls a display order of information pertaining to the plurality of access points discovered by the search means, at least based on whether the access points support the predetermined communication method.

5. The communication apparatus (100) according to claim 4,
wherein in a case where the plurality of access points discovered by the search means include a first group and a second group that support the predetermined communication method, the display control means further controls the display order based on a total number of access points included in each of the first group and the second group.

6. The communication apparatus (100) according to any one of claims 1 to 5,
wherein the predetermined communication method is a method of forming a multi-AP group and transmitting and receiving data of a single item of content via the plurality of access points that operate jointly.

7. The communication apparatus (100) according to any one of claims 1 to 6,
wherein the predetermined communication method is a communication method using a multi-AP communication method compliant with IEEE 802.11bn.

8. The communication apparatus (100) according to claim 7,
wherein the predetermined communication method is a Coordinated-Orthogonal Frequency Division Multiple Access (Co-OFDMA) method in the multi-AP communication method.

9. The communication apparatus (100) according to claim 7,
wherein the predetermined communication method is a Joint Transmission (Joint-TX) method in the multi-AP communication method.

10. The communication apparatus (100) according to any one of claims 1 to 9,
wherein the access point that does not support the predetermined communication method communicates through a communication method compliant with any one or more of IEEE 802.11a/b/g/n/ac/ax/be.

11. The communication apparatus (100) according to claim 5,
wherein in a case where at least one of the first group and the second group supports Coordinated-Orthogonal Frequency Division Multiple Access (Co-OFDMA) in the predetermined communication compliant with IEEE 802.11bn, the display control means controls the display order based on a total number of access points included in each of the first group and the second group.

12. The communication apparatus (100) according to any one of claims 1 to 11,
wherein the information pertaining to the access point that supports the predetermined communication method includes at least one of a Service Set Identifier (SSID), a Basic Service Set Identifier (BSSID), an encryption mode, channel information, and a BSS color of wireless communication.

13. A control method performed by a communication apparatus (100) that connects to an access point (AP) through wireless communication, the control method comprising:
connecting to a plurality of access points that operate jointly, through a predetermined communication method;
searching for an external access point outside the communication apparatus (100) and obtaining information pertaining to the external access point discovered by the searching; and
in a case where the external access point discovered by the searching includes a plurality of access points that support the predetermined communication method and the plurality of access points form a group, controlling information pertaining to the plurality of access points included in the group to be displayed so as to be selectable as a single option when information pertaining to external access points discovered by the searching is displayed.

14. A program for causing a computer to function as each of the means of the communication apparatus (100) according to any one of claims 1 to 12.

15. A computer-readable storage medium storing a program for causing a computer to function as each of the means of the communication apparatus (100) according to any one of claims 1 to 12.
